(19) Europäisches Patentamt
European Patent Office
Office européen des brevets

(11) **EP 3 832 131 B1**

(12) **EUROPÄISCHE PATENTSCHRIFT**

(45) Veröffentlichungstag und Bekanntmachung des Hinweises auf die Patenterteilung:
**06.08.2025 Patentblatt 2025/32**

(21) Anmeldenummer: **20211550.7**

(22) Anmeldetag: **03.12.2020**

(51) Internationale Patentklassifikation (IPC):
**F03D 7/04** $^{(2006.01)}$

(52) Gemeinsame Patentklassifikation (CPC):
**F03D 7/048;** F05B 2260/82; F05B 2260/821;
F05B 2260/8211; Y02E 10/72

(54) **VERFAHREN ZUM ERSTELLEN EINER LEISTUNGSPROGNOSE FÜR EINE WINDENERGIEANLAGE**

METHOD FOR CREATING A PERFORMANCE FORECAST FOR A WIND TURBINE

PROCÉDÉ DE GÉNÉRATION D'UNE PRÉVISION ÉNERGÉTIQUE POUR UNE ÉOLIENNE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.12.2019 DE 102019133059**

(43) Veröffentlichungstag der Anmeldung:
**09.06.2021 Patentblatt 2021/23**

(73) Patentinhaber: **Wobben Properties GmbH**
**26607 Aurich (DE)**

(72) Erfinder:
• **Letzel, Marcus**
  **28832 Achim (DE)**
• **Späth, Stephan**
  **27755 Delmenhorst (DE)**
• **Strunk, Achim**
  **41352 Korschenbroich (DE)**
• **Schröer, Jan-Bernd**
  **40239 Düsseldorf (DE)**
• **Stern, Robin**
  **45473 Mülheim an der Ruhr (DE)**
• **Theuer, Frauke**
  **26129 Oldenburg (DE)**

(74) Vertreter: **Eisenführ Speiser**
**Patentanwälte Rechtsanwälte PartGmbB**
**Postfach 10 60 78**
**28060 Bremen (DE)**

(56) Entgegenhaltungen:
WO-A1-2020/079000     WO-A1-2020/201209
US-A1- 2014 244 188     US-A1- 2018 031 735

**Beschreibung**

Die vorliegende Erfindung betrifft ein Verfahren zum Erstellen einer Leistungsprognose für wenigstens eine Windenergieanlage oder einen Windpark. Die Erfindung betrifft auch eine entsprechende Windenergieanlage bzw. einen entsprechenden Windpark, von dem ein solches Verfahren durchgeführt wird.

Windenergieanlagen sind bekannt, ebenso Windparks, die mehrere Windenergieanlagen aufweisen, um damit elektrische Leistung zu erzeugen und in ein elektrisches Versorgungsnetz einzuspeisen. Wünschenswert ist besonders zur besseren Planbarkeit der einspeisbaren Leistung, eine Prognose dieser einspeisbaren Leistung, die einer zu erwartenden Abgabeleistung der Windenergieanlage bzw. des Windparks entspricht, zu erstellen.

Eine solche Prognose kann anhand von Wettervorhersagen, insbesondere Windvorhersagen erstellt werden. Es hat sich aber herausgestellt, dass solche Wettervorhersagen ungenau sein können. Entsprechend verschlechtert sich auch die Prognose über die zu erwartende Abgabeleistung.

Für eine Verbesserung können die Wettermodelle für die Wettervorhersage verbessert werden. Solche Verbesserungen werden für Wettervorhersagen auch regelmäßig vorgenommen bzw. insgesamt werden heutzutage Wettervorhersagen weiterentwickelt und entsprechend verbessert. Solche Wettervorhersagen werden von überregionalen Anbietern bereitgestellt und dadurch kann es für die konkrete Windenergieanlage bzw. den konkreten Windpark dadurch zu Ungenauigkeiten kommen, dass die Wettervorhersage nicht an den konkreten Aufstellungsort angepasst ist. Um das zu verbessern, kann eine lokale Anpassung vorgenommen werden.

Es wurde nun zusätzlich erkannt, dass weitere Ungenauigkeiten besonders durch spezielle Wetterphänomene auftreten können, die teilweise auch besonders die Windgeschwindigkeit betreffen, die in der Höhe der Rotoren der Windenergieanlagen auftritt. Solche Ungenauigkeiten können durch die Betrachtung lokaler Besonderheiten nicht oder nicht ausreichend berücksichtigt werden, jedenfalls dann, wenn es sich um Wetterphänomene handelt, die nur gelegentlich auftreten.

Die Offenlegungsschrift WO 2020/201209 A1 beschreibt das Erstellen einer Leistungsprognose anhand eines Anlagenortsmodells. Die Offenlegungsschrift WO 2020/079000 A1 beschreibt, zur Bestimmung einer Erwartungsleistung eine Wettervorhersage zu korrigieren. Weiterhin beschäftigen sich auch die Offenlegungsschriften US 2014/0244188 A1 und US 2018/0031735 A1 mit Leistungsprognosen.

Das Deutsche Patent- und Markenamt hat in der Prioritätsanmeldung zur vorliegenden Anmeldung folgenden Stand der Technik recherchiert: DE 10 2018 125 465 A1, DE 10 2019 108 300 A1, EP 3 432 091 A1.

Der vorliegenden Erfindung liegt somit die Aufgabe zugrunde, wenigstens eines der vorstehend beschriebenen Probleme zu adressieren. Insbesondere soll eine Lösung vorgeschlagen werden, die eine Leistungsprognose für wenigstens eine Windenergieanlage im Lichte besonderer Wetterphänomene verbessert. Zumindest soll zu bisher bekannten Lösungen eine alternative Lösung geschaffen werden.

Erfindungsgemäß wird ein Verfahren gemäß Anspruch 1 vorgeschlagen. Demnach wird ein Verfahren zum Erstellen einer Leistungsprognose für wenigstens eine Windenergieanlage über eine zu erwartende Abgabeleistung der wenigstens einen Windenergieanlage vorgeschlagen. Somit können auch mehrere Windenergieanlagen vorgesehen sein und insbesondere kann auch ein Windpark vorgesehen sein, der mehrere Windenergieanlagen umfasst und insbesondere an einem gemeinsamen Netzanschlusspunkt einspeist. Die wenigstens eine Windenergieanlage ist an einem Aufstellungsort aufgestellt.

Das Verfahren schlägt vor, eine Normalprognose zu bestimmen. Eine solche Normalprognose kann besondere dadurch bestimmt werden, dass abhängig von einer Wettervorhersage und darin besonders abhängig von der Windvorhersage eine Leistungsprognose erstellt wird. Besonders kann ermittelt werden, wie viel Leistung, mit der wenigstens einen Windenergieanlage aus dem zu erwartenden Wind erzeugt werden kann. Es können weitere Randbedingungen berücksichtigt werden, wie beispielweise ob eine Windenergieanlage ausgefallen ist, weil sie beispielsweise gewartet wird, oder ob eine Windenergieanlage aufgrund von Vorschriften, wie Schallschutz, nur in einem reduzierten Betrieb betrieben werden kann. Die Normalprognose kann als Zwischenprognose ausgegeben werden, sie kann aber auch lediglich als interner Zwischenschritt auftreten. Es kommt auch in Betracht, dass die Normalprognose, bzw. das Bestimmen der Normalprognose in das Erstellen der Leistungsprognose integriert ist, sodass eine Normalprognose nicht nach außen hervortritt. Wichtig ist, dass das Erstellen der Leistungsprognose über das Erstellen einer Normalprognose um die Berücksichtigung wenigstens eines Sonderwetterphänomens hinausgeht.

Weiterhin wird auf ein, zu einem systematischen Fehler der Normalprognose führenden Sonderwetterphänomen geprüft. Hier wurde überhaupt erkannt, dass ein solches Sonderwetterphänomen existieren kann, zu dem weit unten noch Beispiele erläutert werden. Dabei wird nur auf solche Sonderwetterphänomene geprüft, die zu einem systematischen Fehler der Normalprognose führen. Besonders geht es um solche Wetterphänomene, die zu einem systematischen Fehler führen, der für Windenergieanlagen relevant ist. Für Windenergieanlagen sind besonders systematische Abweichungen der Windgeschwindigkeit in der für die Windenergieanlagen relevanten Höhe von Bedeutung. Besonders in einer Höhe von 50 bis 250 m über dem Grund, auf dem eine Windenergieanlage an Land aufgestellt ist, ist relevant, denn das ist der Bereich, in dem die Rotoren moderner Windenergieanlagen etwa angeordnet sind.

Vorzugsweise wird ein Prüfen auf wenigstens ein lokales, zu einem lokalen systematischen Fehler der Normalprognose führenden Sonderwetterphänomen vorgeschlagen, und ein Korrigieren der Normalprognose gemäß der wenigstens einen ermittelten Korrekturvorschrift, um eine lokal angepasste Leistungsprognose zu erhalten. Als lokales Sonderwetterphänomen, mit entsprechender Korrektur, kann hier ein Sonderwetterphänomen angesehen werden, das örtlich begrenzt ist, auf einen Windpark oder ein, mehrere Windparks umfassendes Windcluster. Vorzugsweise wird auf ein Sonderwetterphänomen geprüft, das besonders in einer Höhe von 50 bis 250m über Grund auftritt.

Jegliche Ausführungen zu einem lokalen Sonderwetterphänomen gelten sinngemäß auch für nicht lokale Sonderwetterphänomene.

Besonders geht es bei dem systematischen Fehler, besonders dem lokalen systematischen Fehler, der Normalprognose um eine Abweichung von dieser Normalprognose, die durch das Sonderwetterphänomen erkannt und daher besonders auch vorhergesagt werden kann. Hier liegt besonders der Gedanke zugrunde, dass die Normalprognose basierend auf einer Wettervorhersage getroffen wird, wobei die Wettervorhersage das Sonderwetterphänomen, besonders das lokale Sonderwetterphänomen nicht kennt, nicht berücksichtigt und/oder in dem der Wettervorhersage zugrundeliegenden Modell nicht ausreichend abbildet. Besonders ist hier zu berücksichtigen, dass Wettervorhersagen üblicherweise nicht oder nicht ausreichend auf Windenergieanlagen und/oder die konkreten Aufstellungsorte der Windenergieanlagen und/oder die für Windenergieanlagen relevanten Höhen abgestimmt sind.

Es wurde erkannt, dass es Wettervorhersagen gibt, die basierend auf einer Vielzahl von Eingangsgrößen wie Satellitenbildern, Luftdruckverteilungen, Temperaturverteilungen, Luftfeuchtigkeitsverteilungen, Windgeschwindigkeitsverteilungen und auch Wolkenverteilungen zu einer bestimmten ersten Wettervorhersage kommen, und die bei denselben oder zumindest ähnlichen Eingangsgrößen, zusätzlich aber einem der Sonderwetterphänomene dennoch wieder zu derselben ersten Wettervorhersage kommen. Möglicherweise kommen sie auch zu einer anderen zweiten Wettervorhersage, die sich somit von der ersten Wettervorhersage unterscheidet, möglicherweise auch begründet durch das Sonderwetterphänomen, ohne dass der Einfluss des Sonderwetterphänomens aber ausreichend stark einfließt.

Besonders führen solche Wettervorhersagen keine ausdrückliche Betrachtung eines solchen Sonderwetterphänomens durch. Allenfalls könnte ein solches Sonderwetterphänomen indirekt dadurch einfließen, dass Einflussgrößen, die das Sonderwetterphänomen bestimmen, gegenüber der ersten Wettervorhersage geändert sind und dadurch zu einer geänderten zweiten Wettervorhersage kommen. Das konkrete Sonderwetterphänomen wird allerdings nicht betrachtet und daher wird auch der Einfluss eines solchen Sonderwetterphänomens nicht ausreichend in der Wettervorhersage wiedergegeben. Zumindest findet das Sonderwetterphänomen nicht ausreichend Einfluss in der für Windenergieanlagen relevanten Höhe.

Weiter wird vorgeschlagen, eine Korrekturvorschrift zum Korrigieren der Normalprognose zu ermitteln, wenn beim Prüfen ein Sonderwetterphänomen erkannt wurde. Es wird also geprüft, ob ein Sonderwetterphänomen vorliegt, liegt ein Sonderwetterphänomen vor, das somit auch identifiziert wurde, wird eine entsprechende Korrekturvorschrift zum Korrigieren der Normalprognose ermittelt. Entsprechend wird dann die Normalprognose korrigiert, nämlich gemäß der wenigstens einen ermittelten Korrekturvorschrift, um dadurch eine angepasste, insbesondere eine lokal angepasste Leistungsprognose zu erhalten.

Beispielsweise kann erkannt worden sein, dass die Windgeschwindigkeit auf Höhe der Rotoren der Windenergieanlage an einem Aufstellungsort um 20 % über der Windgeschwindigkeit gemäß der Wettervorhersage liegt, wenn ein bestimmtes Sonderwetterphänomen erkannt wurde. Entsprechend könnte die Korrekturvorschrift, um bei diesem vereinfachten Beispiel zu bleiben, so gestaltet sein, dass sie die Windgeschwindigkeit gemäß der Normalprognose um 20 % höher ansetzt und daraus die Leistungsprognose entsprechend anpasst. Alternativ, was letztlich gleichwirkend ist, kann auch zu Sonderwetterphänomenen bekannt sein, um wie viel Prozent die tatsächlich aufgetretene Leistung über der Leistung liegt, die auf der Normalprognose aufbaut bzw. der Normalprognose entspricht. Mit anderen Worten kann die Korrekturvorschrift auch so gestaltet sein, dass sich die Leistungsprognose unmittelbar anpasst, ohne über den Zwischenschritt der Anpassung der vorhergesagten Windgeschwindigkeit zu gehen.

Hier wurde also besonders erkannt, dass es konkrete Sonderwetterphänomene geben kann, die bisher nicht berücksichtigt wurden, möglicherweise für die Wettervorhersage außerhalb des Anwendungsbereichs für Windenergieanlagen auch weiterhin nicht relevant sind, aber für Windenergieanlagen zu einem signifikanten Unterschied führen. Besonders wurde erkannt, dass eine Betrachtung von Eingangsdaten alleine beispielsweise über ein allgemeines, übliches Modell bzw. einer üblichen Wettervorhersage, zur Berücksichtigung eines solchen Sonderwetterphänomens nicht ausreichend sein kann. Es wird also besonders die ausdrückliche Prüfung auf ein Sonderwetterphänomen vorgeschlagen.

Die Erfindung betrifft ein Sonderwetterphänomen, das überregional über den Aufstellungsort hinaus auftritt. Es geht also nicht um eine lokale Wetterbesonderheit, sondern um ein überregionales Sonderwetterphänomen, das aber besonders für Windenergieanlagen relevant ist. Insbesondere kann das Sonderwetterphänomen eine Großwetterlage betreffen, wie sogenannte Strahlungstage und wie sogenannte Low-Level-Jet-Nächte. Auf diese Sonderwetterphänomene wird später noch genau eingegangen. Insbesondere tritt das Sonderwetterphänomen in einem Bereich von wenigstens 1000 km$^2$ auf, insbesondere tritt es in einem Bereich von wenigstens 10000 km$^2$ um den Aufstellungsort herum auf. Das Gebiet, in dem das Sonderwetterphänomen auftritt, kann auch noch größer und auch noch viel größer sein.

Gemäß einer Ausführungsform wird vorgeschlagen, dass zum Prüfen des wenigstens einem Sonderwetterphänomens eine Wetterprädiktion durchgeführt wird, die in einem Vorhersagezeitraum von wenigstens einem 15-Minuten Intervall, insbesondere in wenigstens einer Stunde und besonders bevorzugt wenigstens einem Tag auf ein zu erwartendes Auftreten des Sonderwetterphänomens geprüft wird. Das Sonderwetterphänomen als solches kann grundsätzlich auch über eine Wettervorhersage vorhergesagt werden. Insoweit ist hier von einer Wetterprädiktion die Rede, die im Grunde synonym für eine Wettervorhersage steht, hier aber auf die Prädiktion des Sonderwetterphänomens fokussiert ist. Besonders eine Prädiktion im Bereich von einem Tag, oder für kleinere Zeitintervalle, berücksichtigt, dass solche Sonderwetterphänomene zusammen mit einer Tageszeit auftreten bzw. tagsüber oder nachts auftreten und damit kürzer als 12 Stunden auftreten. Für die Verbesserung der Leistungsprognose kann ein solcher Zeitraum ausreichend sein und kann durch die Berücksichtigung der Sonderwetterphänomene, oder eines Sonderwetterphänomens, eine auch in zeitlicher Hinsicht gut verwertbare Verbesserung der Leistungsprognose erreichen.

Gemäß einer Ausführungsform wird vorgeschlagen, dass Strahlungstage ein Sonderwetterphänomen bilden. Strahlungstage sind als Wetterphänomen Meteorologen bekannt und der Begriff "Strahlungstag" ist insoweit ein Fachbegriff. Er beschreibt einen Tag, an dem eine Strahlungswetterlage vorherrscht. Bei einem Strahlungstag liegt während des Tages ein geringer Gesamtbedeckungsgrad von 3/8 oder weniger vor. In anderen Worten ist ein Strahlungstag ein Tag, an dem der Tag besonders sonnig ist, um es anschaulich auszudrücken. Als eine Strahlungswetterlage wird eine Wetterlage mit ungehinderten vertikalen Flüssen der Ein- und Ausstrahlung bezeichnet. Das Sonderwetterphänomen "Strahlungstage" betrifft somit auch den Fall, dass nur ein Strahlungstag auftritt und somit kann das Sonderwetterphänomen "Strahlungstage" auch synonym als "Strahlungstag" bezeichnet werden.

Dazu wird vorgeschlagen, dass in Abhängigkeit davon, ob ein Strahlungstag vorliegt, als Korrekturvorschrift ein zeitabhängiger Korrekturverlauf bestimmt wird. Besonders wurde hier erkannt, dass der zu korrigierende Fehler über den Tagesablauf variiert und dass solche Variationen recht gut vorhersehbar sind. Gegebenenfalls können sie auch beispielsweise durch Messungen zurückliegender Tage aufgenommen werden, die solche Strahlungstage waren bzw. an denen dieses Sonderwetterphänomen des Strahlungstags auftrat. Somit ist dieser zeitabhängige Korrekturverlauf besonders ein Korrekturverlauf über den Tagesverlauf.

Vorzugsweise wird vorgeschlagen, dass Strahlungstage dadurch als Sonderwetterphänomen erkannt werden, dass 2, 3, 4 oder alle der nachfolgend erläuterten Strahlungsprüfkriterien erfüllt sind. Ein Strahlungsprüfkriterium ist, ob der Bedeckungsgrad für niedrige Wolken unterhalb eines vorbestimmten ersten Deckungsgrenzwertes liegt. Der Bedeckungsgrad und auch der Begriff "niedrige Wolken" sind jeweils Fachbegriffe, jedenfalls für Meteorologen. Niedrige Wolken befinden sich in gemäßigten Breiten im Bereich von 0 bis 2000m Höhe. Der Bedeckungsgrad gibt an, wie groß der Anteil des Himmelsgewölbes ist, der insgesamt mit Wolken bedeckt ist. Hier wird vorgeschlagen, für den Bedeckungsgrad einen ersten Deckungsgrenzwert anzusetzen. Liegt also der erfasste Bedeckungsgrad für niedrige Wolken unterhalb dieses vorbestimmten ersten Deckungsgrenzwertes, so kann dies darauf hindeuten, dass Strahlungstage als Sonderwetterphänomen vorliegen.

Ein weiteres Strahlungsprüfkriterium ist, ob ein Bedeckungsgrad für mittelhohe Wolken unterhalb eines vorbestimmten zweiten Deckungsgrenzwertes liegt. Auch mittelhohe Wolken sind für den Meteorologen in ihrer Höhe klar definiert, nämlich in gemäßigten Breiten im Bereich von 2000 bis 7000m Höhe, und in den Tropen bis 8000m Höhe. Das Kriterium prüft auch für diese mittelhohen Wolken den Bedeckungsgrad. Somit wird auch hier dann von dem Vorliegen von Strahlungstagen als Sonderwetterphänomen ausgegangen, wenn ein geringer Bedeckungsgrad vorliegt. Durch die Vorgabe jeweils eines Deckungsgrenzwertes kann das Kriterium klar definiert werden und wäre dadurch automatisch überprüfbar. Eine Korrektur der Leistungsprognose könnte automatisch eingeleitet werden.

Als Grenzwert für den Bedeckungsgrad für sowohl für mittlere als auch niedrige Wolken bietet sich beispielsweise 60 % an.

Vorzugsweise sollten die Bedeckungsgrade für mittlere und niedrige Wolken jeweils niedrig sein, denn beide Wolkenschichten sollten möglichst durchlässig sein, damit ausreichend Strahlung den Boden erreicht. Es wurde erkannt, dass es deshalb besonders dann, wenn beiden Wolkenschichten durchlässig sind, zu dem Sonderwetterphänomen der Strahlungstage kommt. Es wurde auch erkannt, dass es auf einen Bedeckungsgrad höherer Wolken nicht ankommt, da er die Strahlung am Boden kaum beeinflusst.

Ein weiteres vorgeschlagenes Strahlungsprüfkriterium ist, ob eine kurzwellige solare Einstrahlung mit Wellenlängen im Bereich von 400 - 1000 nm, eine Bestrahlungsstärke oberhalb eines vorbestimmen Bestrahlungsgrenzwertes aufweist. Es wird hier vorgeschlagen, dass der vorbestimmte Bestrahlungsgrenzwert insbesondere im Bereich von 450 bis 900 W/m$^2$ liegt.

Es wurde somit erkannt, dass es relevant ist, zumindest auch relevant ist, wie energiereich die Strahlung ist. Somit wird vorgeschlagen, dass zusätzlich oder alternativ zur Überprüfung der Strahlungsstärke in dem vorbestimmten Frequenzspektrum, auch die Strahlungsintensität oder eine andere repräsentative Größe geprüft werden kann. Dazu zählt auch eine Strahlungsenergie, insbesondere pro Flächeneinheit. Ebenfalls kommt alternativ oder zusätzlich in Betracht, eine Bestrahlung zu prüfen, auch für die kann ihre Energieeinbringung oder ihr Energiegehalt geprüft werden, um ein weiteres Beispiel zu nennen.

Insbesondere wird vorgeschlagen, dass die Prüfung der kurzwelligen solaren Einstrahlung, oder die Prüfung einer anderen repräsentativen Größe, für eine vorbestimmte Zeitdauer vorliegen muss, insbesondere für 3 Stunden, also wenigstens für 3 Stunden. Hier kommt auch in Betracht, dass die Zeit in einem Bereich von 2 bis 4 Stunden, oder oberhalb von 2 Stunden oder oberhalb von 3 Stunden, jeweils inklusive, liegt. Dieses Kriterium stellt sicher, dass nur Strahlungswetterlage mit einer Mindestdauer berücksichtigt werden.

Ein weiteres Strahlungsprüfkriterium, das vorgeschlagen wird, ist, ob eine Windgeschwindigkeit eines Windes wenigstens eines Druckniveaus in einem vorbestimmten Windgeschwindigkeitsbereich liegt. Es wird somit nicht alleine für eine Windgeschwindigkeit geprüft, ob diese in dem vorbestimmten Windgeschwindigkeitsbereich liegt, sondern diese Untersuchung findet konkret für ein vorgegebenes Druckniveau statt. Vorzugsweise wird als Druckniveau das von 925hPa genommen und/oder es wird das Druckniveau von 950hPa betrachtet. Meteorologisch ist es üblich, den Druck als Höhenkoordinate zu betrachten. Das Druckniveau von 925 hPa entspricht in einem Koordinatensystem mit dem Druck als Höhenkoordinate einer fixen Höhe, das Niveau von 950 hPa ist eine weitere fixe Höhe in diesem Koordinatensystem. Für den Fachmann, insbesondere einen Meteorologen ist es üblich, diese Konvention zu verwenden. In den externen Wettervorhersagen werden Windgeschwindigkeiten auch fertig interpoliert auf diese fixen Druckflächen bereitgestellt.

Ein Strahlungstag ist für sich genommen nicht abhängig von der Windgeschwindigkeit auf diesen Druckflächen. Es wurde besonders erkannt, dass hohe Prognosefehler in den externen Wetterprognosen aber nur bei höheren Windgeschwindigkeiten auf diesen Druckflächen auftreten, nicht bei niedrigen Windgeschwindigkeiten. Für die Identifikation des Sonderwetterphänomens sollte daher eine Windgeschwindigkeit von mindestens etwa 3 m/s auf diesen Druckflächen vorliegen.

Ein weiteres mögliches Strahlungskriterium ist, ob der Sonnenstand oberhalb einer vorbestimmten Sonnenstandsgrenze liegt. Auch das beeinflusst, ob das Sonderwetterphänomen Strahlungstag vorliegt, oder nicht.

Als Sonnenstand kann hier besonders die Sonnenelevation angesehen werden, also der Sonnenstand bezogen auf den Tageslauf der Sonne, demnach die Sonne um 12:00 etwa bei 90° steht, nicht nur am Äquator. Diese Sonnenelevation ist unabhängig von der Jahreszeit. Es wird nur der Winkel in longitudinaler Richtung betrachtet. Über den Sonnenstand kann somit auch gut programmierbar die Tageszeit erkannt werden. Die Korrektur der Leistungsprognose beginnt im Tagesverlauf einige Zeit nach Sonnenaufgang. Dies kann z.B. mit einem Sonnenstand von > 40° am Morgen oder einem anderen Grenzwert approximiert werden. Die Korrektur der Leistungsprognose ist nur bis kurz vor Sonnenuntergang nötig, dies kann z.B. mit einem Sonnenstand von < 12 ° am Abend approximiert werden. Es geht aber über die reine Prüfung der Tageszeit hinaus, weil ein solcher Sonnenstand nicht nur mit der Jahreszeit, sondern auch mit der geographischen Position schwankt. Insgesamt können also standortgenau die Beginn- und Endzeiten der notwendigen Korrektur der Leistungskurve über den Sonnenstand approximiert werden.

Eine weitere Implementierung kann andere Grenzwerte vorsehen oder auch Grenzwerte, die im Jahresverlauf schwanken, also saisonal angepasst sind, da die Wertebereiche des Sonnenstands auch stark vom aktuellen Tag im Jahr abhängen.

Vorzugsweise wird für die Prüfung basierend auf den Strahlungsprüfkriterien vorgeschlagen, eine numerische Wetterprognose zu bilden und darauf die Strahlungsprüfkriterien, mindestens einen oder einige davon, anzuwenden. Es wird also eine numerische Wetterprognose gebildet, die dazu auch von einem externen Anbieter eingeholt werden kann, und zu dieser werden dann die genannten Strahlungsprüfkriterien durchgeprüft. Vorzugsweise wird vorgeschlagen, dass alle genannten Strahlungsprüfkriterien durchgeprüft werden. Insbesondere wird dann von Strahlungstagen ausgegangen, wenn alle Prüfkriterien erfüllt sind, wobei es bei dem Prüfkriterium, ob eine Windgeschwindigkeit eines Windes wenigstens eines Druckniveaus in einem vorbestimmten Windgeschwindigkeitsbereich liegt, nur für eines der beiden genannten Druckniveaus geprüft zu werden braucht. Dabei kommen aber beide genannten Druckniveaus in Betracht. Die Prüfung kann also für das Druckniveau von etwa 925hPa oder für das Druckniveau von etwa 950hPa durchgeführt werden.

Gemäß einer Ausführungsform wird vorgeschlagen, dass Low-Level-Jet-Nächte ein Sonderwetterphänomen bilden. Solche Low-Level-Jet-Nächte beschreiben ein Phänomen, bei dem durch das Ausbilden einer nächtlichen Bodeninversion eine stabile Grenzschicht gebildet wird, und sich oberhalb dieser stabilen Grenzschicht eine hohe Jet-Geschwindigkeit ausbildet. Diese Jet-Geschwindigkeit zeichnet sich dadurch aus, dass sie höher ist als der geostrophische Wind, also als der Wind, der rein aus dem horizontalen Druckgradient zu erwarten wäre. Ein Meteorologe als Fachmann bezeichnet dies als supergeostrophisch. Die Ursache hierfür ist die vollständige und plötzliche Entkopplung des Windes von der Bodenreibung. Hier wurde besonders erkannt, dass dieses Sonderwetterphänomen zu einem systematischen Fehler in herkömmlichen Wetterprognosen führt, also auch zu einem Fehler in der Normalprognose führt, und dass durch die Kenntnis dieses Sonderwetterphänomens der Low-Level-Jet-Nächte dieser systematische Fehler korrigiert oder zumindest verringert werden kann.

Dabei wurde erkannt, dass besonders auch die Korrektur von der Jet-Windgeschwindigkeit abhängen kann. Somit wird auch besonders vorgeschlagen, dass in Abhängigkeit von der Jet-Windgeschwindigkeit, ein zeitabhängiger Korrekturverlauf als Korrekturvorschrift bestimmt wird.

Besonders wurde erkannt, dass ein solches Sonderwetterphänomen für Windenergieanlagen von großer Relevanz ist, weil dieses Phänomen vorwiegend in entsprechenden Höhen auftritt, in denen auch die Rotoren der Windenergieanlagen aktiv sind.

Vorzugsweise werden Low-Level-Jet-Nächte dadurch als Sonderwetterphänomen erkannt, dass 2, 3 oder alle nachfolgend beschriebenen Jet-Prüfkriterien erfüllt sind. Besonders bevorzugt kann davon ausgegangen werden, dass Low-Level-Jet-Nächte, wobei es auch nur eine einzige Low-Level-Jet-Nacht sein kann, vorliegen, wenn alle nachfolgend erläuterten Jet-Prüfkriterien erfüllt sind.

Ein Jet-Prüfkriterium ist, ob der Bedeckungsgrad für niedrige Wolken unterhalb eines vorbestimmten ersten Nacht-Deckungsgrenzwertes liegt, insbesondere unterhalb von 10 %. Dies betrifft niedrige Wolken im Sinne eines meteorologischen Verständnisses, demnach generell zwischen niedrigen, mittelhohen und hohen Wolken unterschieden wird. Dieses erste Kriterium bezieht sich auf niedrige Wolken und für die wird ein erster Nacht-Deckungsgrenzwert zugrunde gelegt. Somit erfolgt diese Prüfung entsprechend auch nachts, was für die übrigen Jet-Prüfkriterien ebenfalls gilt.

Ein weiteres Jet-Prüfkriterium ist, ob der Bedeckungsgrad für mittelhohe Wolken unterhalb eines vorbestimmten zweiten Nachtdeckungsgrenzwertes, insbesondere unterhalb von 10 % liegt. Die Überprüfung des Bedeckungsgrades, der ebenfalls ein Fachbegriff aus der Meteorologie ist, wird hier somit für mittelhohe Wolken vorgeschlagen. Dafür wird ein zweiter Nachtdeckungsgrenzwert zugrunde gelegt, der nicht unbedingt, aber üblicherweise von dem ersten Nachtdeckungsgrenzwert abweicht.

Besonders geht es bei der Überprüfung des Bedeckungsgrades, das gilt sowohl für niedrige Wolken, als auch für mittelhohe Wolken, darum, dass dieser vergleichsweise niedrig ist.

Besonders geht es um klare Nächte und die können anhand dieses Bedeckungsgrades spezifiziert werden. Besonders wird vorgeschlagen, den Bedeckungsgrad sowohl für niedrige Wolken, als auch für mittelhohe Wolken zu prüfen, also diese beiden Jet-Prüfkriterien beide zu prüfen, wobei für die Annahme von Low-Level-Jet-Nächten beide erfüllt sein sollten.

Als weiteres Jet-Prüfkriterium wird zugrunde gelegt, ob der Sonnenstand unterhalb einer vorbestimmten Jet-Sonnenstandsgrenze liegt, die also vorgegeben werden kann. Dieser Sonnenstand ist insoweit eine Rechengröße, weil in der Nacht, in der hier geprüft wird, üblicherweise keine Sonne scheint. Der Sonnenstand ist trotzdem bekannt. Insoweit wird auch hier die Prüfung vorgeschlagen, ob gerade Tag oder Nacht vorliegt.

Als ein weiteres Jet-Prüfkriterium wird geprüft, ob die relative, spezifische oder absolute Luftfeuchte wenigstens eines vorbestimmten Druckniveaus in einem vorbestimmten Feuchtebereich liegt. Vorzugsweise wird dies für ein vorbestimmtes Druckniveau von etwa 925hPa und/oder für ein vorbestimmtes Druckniveau von etwa 950hPa betrachtet. Auch hier wurde erkannt, dass die Luftfeuchte in den genannten vorbestimmten Druckniveaus, zumindest in einem davon, eine Aussage darüber zulässt, ob das Ausbilden einer nächtlichen Bodeninversion und als Folge davon, das Bilden einer stabilen Grenzschicht wahrscheinlich ist. Als Grenzwert der Feuchte muss der Wertebereich derart gewählt werden, dass er eine relativ trockene Atmosphäre zeigt. Beispielsweise kann bei der Verwendung der relativen Feuchte der Wertebereich von 0 bis 85 % als notwendiges Kriterium angesehen werden.

Auch das Überprüfen, ob das Sonderwetterphänomen der Low-Level-Jet-Nächte vorliegt, wird so durchgeführt, dass eine numerische Wetterprognose gebildet wird und diese auf die Jet-Prüfkriterien untersucht wird. In der numerischen Wetterprognose liegen somit all die zu prüfenden Daten vor, und meist auch noch weitere Daten, die somit in einer automatisierten Prüfung, also besonders in einem Prozessrechner, geprüft werden können. Dadurch, dass eine Wetterprognose verwendet wird, kann die Prüfung auch vorrausschauend gemacht werde. Es kann also vorher, bevor das jeweilige Sonderwetterphänomen auftritt, sei es nun das Phänomen der Low-Level-Jet-Nächte oder das Phänomen der Strahlungstage, erkannt werden, ob diese Sonderwetterphänomene oder eines davon zu erwarten sind und ebenfalls kann auch schon die vorgeschlagene, davon abhängige Korrektur vorgenommen werden, also die Korrekturvorschrift bestimmt werden. Damit kann die Normalprognose verbessert werden.

Gemäß einer Ausführungsform wird vorgeschlagen, dass im Falle einer erkannten Low-level-Jet-Nacht im sich anschließenden Morgen geprüft wird, ob ein morgendlicher Dip auftritt. Ein morgendlicher Dip beschreibt das Wetterphänomen, dass sich nach Sonnenaufgang vom Boden eine konvektive atmosphärische Grenzschicht aufbaut, die den Wind wieder eine Bodenreibung erfahren lässt. Infolge dessen bricht der Low Level Jet zusammen und die Winde sind schlagartig nicht mehr supergeostrophisch, sondern deutlich kleiner als der geostrophische Wind. Mit anderen Worten bricht hier eine Low-Level-Jet-Nacht zusammen. Ein Low-Level-Jet bricht besonders durch die aufkommende Sonneneinstrahlung am Morgen zusammen.

Es wird nun vorgeschlagen, dass abhängig davon, ob ein morgendlicher Dip erkannt wurde, eine Korrektur als Korrekturvorschrift, oder als Teil der Korrekturvorschrift bestimmt wird. Auch hier werden Vorhersagewerte verwendet, um entsprechende Verhalten vorherzusagen. Besonders wird auch hier eine numerische Wetterprognose gebildet und auf die Kriterien zum Erkennen eines morgendlichen Dips angewendet.

Gemäß einer Ausführungsform wird vorgeschlagen, dass wenigstens eine der ermittelten Korrekturvorschriften aus früheren, beim Auftreten eines der Sonderwetterphänomene erfassten Werte, abgeleitet wird. Der Einfluss der Sonderwetterphänomene wurde erkannt und es wurde erkannt, dass aus diesem eine Korrekturvorschrift abgeleitet werden kann. Besonders für die Parametrierung bzw. andere Konkretisierungen der Korrekturvorschriften wird vorgeschlagen, dies aus früheren, beim Auftreten eines der Sonderwetterphänomene erfassten Werte abzuleiten. Wenn ein solches Sonderwetterphänomen also erstmalig auftritt, wird es erkannt und es wird ein Vergleich angestellt zwischen der Normalprognose und den Werten, die sich dann für den Zeitraum der Normalprognose, bei Auftreten des wenigstens einen Sonderwetterphänomens, eingestellt haben. Aus dieser Differenz kann dann die Korrekturvorschrift abgeleitet werden. Beispielsweise kann eine prozentuale Abweichung festgestellt werden und es kann dann beispielsweise diese prozentuale Abweichung von der Normalprognose als Korrekturvorschrift hinterlegt werden. Es kommen aber auch detaillierte Betrachtungen infrage, wie beispielsweise einen Verlauf der Abweichung zwischen der Normalprognose und der sich tatsächlich einstellenden Werte aufzunehmen und daraus eine entsprechende Korrekturvorschrift mit zeitlichem Verlauf abzuleiten.

Außerdem oder alternativ wird vorgeschlagen, beim erneuten Auftreten eines betreffenden Sonderwetterphänomens die ermittelten Korrekturvorschriften zu adaptieren. Beispielsweise kann bei einem erneuten Auftreten eines betreffenden Sonderwetterphänomens nachjustiert werden oder durch ständig wiederkehrende Adaptionen können statistische Schwankungen reduziert werden.

Gemäß einer Ausführungsform wird vorgeschlagen, dass beim Auftreten eines der Sonderwetterphänomene ein Zusammenhang zwischen erfassten Leistungswerten und prognostizierten Leistungswerten gemäß einer zugehörigen Normalprognose als Korrekturzusammenhang erstellt wird. Es werden also die Leistungswerte der Normalprognose mit den dann tatsächlich erfassten Leistungswerten verglichen, in dem besonders eine prozentuale Abweichung erkannt wird, die dann als Korrekturzusammenhang erstellt wird, um ein einfaches Beispiel zu nennen.

Insbesondere wird aber vorgeschlagen, dass der Korrekturzusammenhang über eine Regression über mehrere Leistungswerte erfolgt. Es werden also mehrere Wertepaare aufgenommen, bei denen jeweils zu einem prognostizierten Leistungswert ein erfasster Leistungswert zugeordnet wird. Dadurch entstehen viele Wertepaare, von denen die erfassten Leistungswerte von den Leistungswerten der Normalprognose abhängen. Dieser Zusammenhang wird durch die Regression angenähert. Im einfachsten Fall erfolgt eine Annäherung über eine lineare Funktion. Bezogen auf eine graphische Darstellung bilden die Wertepaare eine Punktewolke, die durch eine Regressionskurve, im linearen Fall also durch eine Regressionsgrade, angenähert wird. Das Problem kann numerisch beispielsweise über das Bilden einer Pseudoinversen gelöst werden.

Vorzugsweise wird vorgeschlagen, dass für prognostizierte Leistungswerte unterhalb einer ersten Leistungsgrenze ein unterer Korrekturzusammenhang erstellt wird, insbesondere über eine lineare Regression, und optional für prognostizierte Leistungswerte oberhalb der ersten Leistungsgrenze ein oberer Korrekturzusammenhang erstellt wird. Auch der obere Korrekturzusammenhang wird vorzugsweise über eine lineare Regression erstellt. Hier wurde besonders erkannt, dass der Korrekturzusammenhang für niedrige Leistungswerte und damit für niedrige Windgeschwindigkeiten grundsätzlich anders sein kann, als der für hohe Leistungswerte, also für hohe Windgeschwindigkeit. Die Grenze kann insbesondere im Bereich von 0,3 bis 0,5 der normierten Leistungsgrenze der Windenergieanlage liegen, also insbesondere bei 30 bis 50 Prozent der Nennleistung der Windenergieanlage.

Außerdem oder zusätzlich wird vorgeschlagen, dass für prognostizierte Leistungswerte unterhalb und oberhalb der ersten Leistungsgrenze, also für alle prognostizierten Leistungswerte, ein gesamter Korrekturzusammenhang erstellt wird. Dieser differenziert somit zwar nicht mehr zwischen Unterschieden bei niedrigen Windgeschwindigkeiten einerseits und hohen Windgeschwindigkeiten andererseits, dafür bildet er einen Gesamtzusammenhang. Vorzugsweise wird dieser gesamte Korrekturzusammenhang nicht über eine lineare Regression, also beispielsweise über eine quadratische Regression, eine kubische Regression oder eine andere Regression angenähert. Bei einer quadratischen Regression wird eine quadratische Funktion zur Annäherung zugrunde gelegt. Eine solche Näherungsfunktion kann beschrieben werden durch die Gleichung:

$$y = k_0 + k_1 * x + k_2 * x^2$$

Hierbei steht y für die Leistung gemäß der angepassten, insbesondere lokal angepassten Leistungsprognose und x für die Leistungswerte der Normalprognose. Die Variablen $k_0$, $k_1$, $k_2$ bilden die Parameter der Korrekturvorschrift. Um diese Parameter der Korrekturvorschrift zu bestimmen, kann ein Gleichungssystem mit vielen obiger Gleichungen aufgestellt werden, in denen jeweils für y der erfasste Leistungswert eingesetzt wird und für x der zugehörige Leistungswert der Normalprognose. Das entstehende Gleichungssystem kann mit Hilfe der Pseudoinversen gelöst werden, insbesondere, wenn wenigstens 4 Messwerte aufgenommen werden und entsprechend ein Gleichungssystem mit wenigstens 4 Gleichungen aufgestellt wird.

Somit wird vorgeschlagen, dass zum Erstellen der angepassten, insbesondere lokal angepassten Leistungsprognose in Abhängigkeit von der Normalprognose der untere, obere und/oder gesamte Korrekturzusammenhang die Korrekturvorschrift bildet bzw. bilden. Dabei kommt auch in Betracht, dass die Korrekturvorschrift nicht unmittelbar dadurch gebildet wird, sondern aus dem unteren, oberen und/oder gesamten Korrekturzusammenhang abgeleitet wird. Die oben genannte Gleichung als Beispiel einer Regressionskurve kann als Korrekturzusammenhang unmittelbar die Korrekturvorschrift bilden. Im linearen Fall fiele der quadratische Term weg und die verbleibenden Korrekturparameter $k_0$, $k_1$ nehmen dann natürlich andere Werte an. Die so bestimmte Gleichung kann somit unmittelbar die Korrekturvorschrift bilden. Es kommt aber auch in Betracht, dass diese weiter modifiziert wird und/oder in ihrer Dimensionierung angepasst wird. Es kommt auch in Betracht, dass für mehrere erfasste Sonderwetterphänomene entsprechend mehrerer Korrekturzusammenhänge aufgestellt werden und aus diesen mehreren Korrekturzusammenhängen eine Korrekturvorschrift abgeleitet wird, zumindest für einen Leistungsbereich jeweils eine Korrekturvorschrift abgeleitet wird. Bspw. können Korrekturkurven, bzw. Korrekturzusammenhänge, die als Korrekturkurven dargestellt werden können, zu einer gesamten Korrekturkurve zusammengesetzt werden. Das kann bspw. so erfolgen, dass die einzelnen Korrekturzusammenhänge jeweils als Polynome definiert sind und diese Polynome dann zu einem Polynomzug besonders im Sinne eines Splines zusammengesetzt werden.

Die Verwendung von Regressionen ist ein Beispiel, insbesondere ein vergleichsweise einfaches Beispiel. Es können aber auch komplexere Modelle wie Neuronale Netze, Random Forests oder direkte multivariante Regressionen Verwendung finden. Es könnte statt einer Variable Leistung die Leistung und alle Strahlungskriterien, die berücksichtigt werden sollen, als Eingangsvariablen für eine Regression verwendet werden. Dadurch kann statt der isolierten Berechnung einer Korrekturkurve und dann Anwendung der Korrekturkurve, die Korrektur bzw. die Berücksichtigung der Sonderwetterphänomene direkt in eine Gesamtbetrachtung einfließen.

Vorzugsweise wird vorgeschlagen, dass

- der gesamte Korrekturzusammenhang ein normaler Korrekturzusammenhang ist, der zur Korrektur der Normalprognose verwendet wird, wenn keines der Sonderwetterphänomene erkannt wurde, wobei

- der untere Korrekturzusammenhang ein Sonderkorrekturzusammenhang ist, der zur Korrektur der Normalprognose unter Berücksichtigung wenigstens eines der Sonderwetterphänomene verwendet wird, und

- der obere Korrekturzusammenhang ein Übergangskorrekturzusammenhang ist, der mit zunehmenden prognostizierten Leistungswerten den unteren Korrekturzusammenhang in den gesamten Korrekturzusammenhang bzw. normalen Korrekturzusammenhang überführt.

Hier wurde besonders erkannt, dass es auch für den Fall, dass kein Sonderphänomen erkannt wurde, vorteilhaft sein kann, die Normalprognose zu korrigieren. Auch hier kann der Korrekturzusammenhang über eine Regression über mehrere Leistungswerte erfolgen, oder anderweitig, wie oben beschrieben wurde. Besonders wurde erkannt, dass das Sonderwetterphänomen in unteren Leistungsbereichen besonders dominant ist und daher für größere Leistungen ein Übergang zu dem normalen Korrekturzusammenhang sinnvoll sein kann.

Gemäß einer Ausführungsform wird vorgeschlagen, dass die Normalprognose abhängig von einer numerischen Wetterprognose erstellt wird. Eine solche numerische Wetterprognose kann die Windenergieanlage entweder vor Ort erstellen, aus Rohdaten, die sie erhält, Messungen, die sie aufgenommen hat, oder es kommt auch in Betracht, dass die numerische Wetterprognose insgesamt auf einem zentralen externen Server bzw. von einem externen Anbieter erstellt und an die jeweilige Windenergieanlage bzw. an den jeweiligen Windpark übertragen wird. Für jede Windenergieanlage kann dann aus der numerischen Wetterprognose, besonders aus den Winddaten die von der Windenergieanlage abgebbare Leistung bestimmt werden und damit die Normalprognose abhängig von der numerischen Wetterprognose erstellt werden. Durch die Verwendung der numerischen Wetterprognose wird besonders ermöglicht, dass auch diese Daten so vorliegen, dass sie automatisiert von einem Prozessrechner bearbeitet werden können, insbesondere auch so bearbeitet werden können, dass auf sie die Korrekturvorschrift angewendet werden kann.

Es wird auch ein Verfahren zum Erstellen einer Gesamtleistungsprognose für mehrere Windenergieanlagen, insbesondere für mehrere Windparks vorgeschlagen. Dabei sind jeweils mehrere in einem vorbestimmten Bereich aufgestellte Windenergieanlagen und/oder Windparks in Windclustern zusammengefasst. Besonders können solche Windcluster über einen großen Bereich von wenigstens 1000 km$^2$ insbesondere wenigstens 10000km$^2$ verteilt sein.

Für jedes Windcluster wird eine Leistungsprognose gemäß einem Verfahren gemäß wenigstens einer der vorstehend beschriebenen Ausführungsformen erstellt. Es wird also für jedes Windcluster eine Normalprognose bestimmt und diese in Abhängigkeit von einem Sonderwetterphänomen, das zu einem systematischen Fehler der Normalprognose, insbesondere einem lokalen systematischen Fehler der Normalprognose führt, über eine abhängig von diesem erfassten Sonderwetterphänomen ermittelten Korrekturvorschrift korrigiert, zumindest verbessert.

Als Gesamtleistungsprognose wird dann die Summe der Leistungsprognosen aller Windcluster, die also erfindungsgemäß basierend jeweils auf eine Normalprognose korrigiert wurden, gebildet. Das erfolgt so, dass für jedes Windcluster wenigstens das Prüfen auf das wenigstens eine Sonderwetterphänomen oder lokale Sonderwetterphänomen und das Ermitteln wenigstens einer Korrekturvorschrift unabhängig von den übrigen Windclustern erfolgt.

Somit wird eine Gesamtprognose für mehrere Windcluster verbessert. Dafür wird clusterweise eine Normalprognose bestimmt und abhängig eines auftretenden Sonderwetterphänomens korrigiert. Dadurch ergeben sich mehrere individuell korrigierte Leistungsprognosen, nämlich für jedes Windcluster. Die so korrigierten Leistungsprognosen der einzelnen \Windcluster werden dann zu der Summe der Leistungsprognosen aller Windcluster zusammengeführt und bilden die Gesamtleistungsprognose.

Hier wurde erkannt, dass eine Gesamtleistungsprognose für einen großen Bereich, der nämlich durch viele Windcluster abgedeckt wird, besonders für eine gute Steuerung eines Leistungsangebots vorteilhaft ist. Gleichzeitig ist es aber vorteilhaft, diese Leistungsprognose möglichst genau bereitstellen zu können, es soll also die Gesamtleistungsprognose besonders genau bereitgestellt werden können. In der Literatur ist gezeigt, dass eine solche Gesamtleistungsprognose besonders bei großer räumlicher Entfernung der Teilnehmer, also besonders bei vielen Windclustern mit jeweils vielen Windenergieanlagen allein aus statistischen Überlegungen heraus eine gute Genauigkeit bildet.

Es wurde aber erkannt, dass eine solche Gesamtleistungsprognose verbessert werden kann, indem einzelne Windcluster in ihrer Prognose verbessert werden.

Vorzugsweise weisen mehrere Windcluster, insbesondere mehr als die Hälfte der Windcluster und weiter bevorzugt, insbesondere alle Windcluster jeweils eine räumliche Ausdehnung mit einem mittleren Durchmesser von 50 km bis 500 km auf, insbesondere mit einem mittleren Durchmesser von 100 km bis 300 km. Somit bildet die Menge der Windenergieanlagen, für die die Gesamtleistungsprognose erstellt wird, einen großen räumlichen Bereich dar und der wird durch die Aufteilung in Windcluster besser beherrschbar, jedenfalls hinsichtlich der Leistungsprognose. Es wurde erkannt, dass besonders die erläuterten Sonderwetterphänomene eine solche räumliche Ausdehnung haben, dass sie jeweils einen oder mehrere ganze Windcluster betreffen. Gleichwohl betreffen sie aber nicht unbedingt alle Windcluster, also nicht unbedingt den gesamten Bereich, der in die Windcluster aufgeteilt wurde. Das wurde erkannt und daher wird auch vorgeschlagen, die Korrektur der Normalprognose clusterweise durchzuführen.

Erfindungsgemäß wird zudem ein Windenergiesystem vorgeschlagen. Das Windenergiesystem weist wenigstens eine Windenergieanlage auf und ist vorbereitet zum Erstellen einer Leistungsprognose über eine zu erwartende Abgabeleistung der wenigstens einen Windenergieanlage, wobei

- die wenigstens eine Windenergieanlage an einem sonder aufgestellt ist, und das Windenergiesystem eine Steuereinrichtung aufweist, die dazu vorbereitet ist, ein Verfahren auszuführen, umfassend die Schritte,

- Bestimmen einer Normalprognose,

- Prüfen auf wenigstens ein, zu einem systematischen Fehler der Normalprognose führenden Sonderwetterphänomen,

- Ermitteln wenigstens einer Korrekturvorschrift zum Korrigieren der Normalprognose, wenn beim Prüfen ein Sonderwetterphänomen erkannt wurde, und

- Korrigieren der Normalprognose gemäß der wenigstens einen ermittelten Korrekturvorschrift, um eine angepasste Leistungsprognose zu erhalten.

Insbesondere wird ein Windenergiesystem vorgeschlagen, das dazu vorbereitet ist, ein Verfahren gemäß einer der vorstehend erläuterten Ausführungsformen auszuführen. Die Ausführung des Verfahrens kann insbesondere auf der Steuereinrichtung stattfinden. Die Steuerungseinrichtung kann hierzu eine Normalprognose basierend auf einer Wettervorhersage bestimmen. Insbesondere kann die Normalprognose die zu erwartende Abgabeleistung der Windenergieanlagen abhängig von Winddaten der Wetterprognose bestimmen.

Es wird besonders vorgeschlagen, dass das Erstellen einer Leistungsprognose über eine zu erwartende Abgabeleistung der wenigstens einen Windenergieanlage so durchgeführt wird, wie gemäß wenigstens einer vorstehend beschriebenen Ausführungsform erläutert wurde. Insbesondere kann dazu ein entsprechendes Verfahren auf der Steuereinrichtung implementiert sein. Die Steuereinrichtung kann dazu eine Prozessrechnung aufweisen, auf dem entsprechende Schritte des Verfahrens ausgeführt werden.

Gemäß einer Ausführungsform umfasst das Windenergiesystem mehrere Windenergieanlagen, insbesondere umfasst es mehrere Windparks. Dazu ist das Windenergiesystem, insbesondere seine Steuereinrichtung, dazu vorbereitet, eine Gesamtleistungsprognose für die mehreren Windenergieanlagen bzw. die mehreren Windparks zu erstellen. Auch das kann auf der Steuereinrichtung ausgeführt sein und/oder auf einem entsprechenden Prozessrechner der Steuereinrichtung implementiert sein.

Die Erfindung wird nun nachfolgend anhand von Ausführungsformen unter Bezugnahme auf die begleitenden Figuren beispielhaft näher erläutert.

Figur 1     zeigt eine Windenergieanlage in einer perspektivischen Darstellung.

Figur 2     zeigt einen Windpark in einer schematischen Darstellung.

Figur 3     illustriert ein Schema zum Prüfen auf das Sonderwetterphänomen Strahlungstage

Figur 4     illustriert ein Schema zum Prüfen auf das Sonderwetterphänomen Low-Level-Jet-Nächte.

Figur 5     zeigt ein Diagramm zur Veranschaulichung einer Korrekturvorschrift mittels Regression.

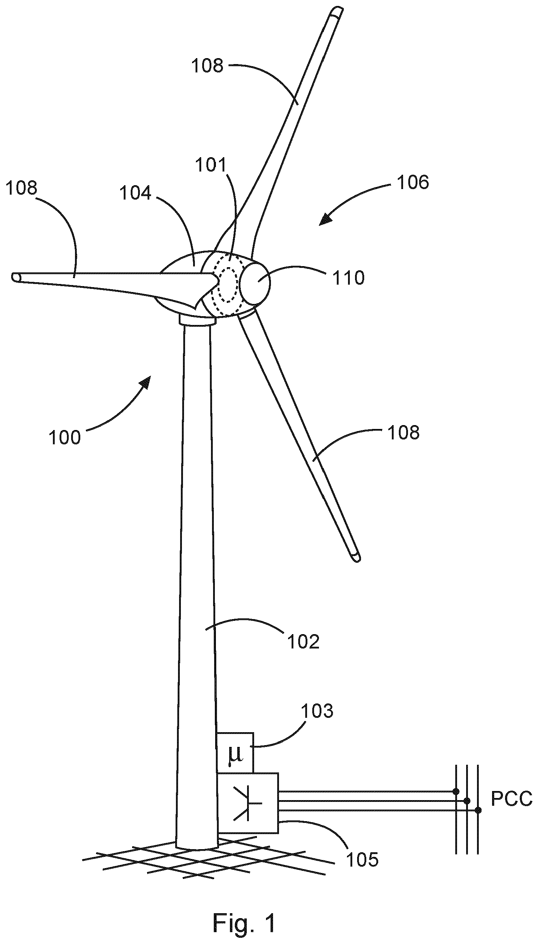

Figur 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an. Die Windenergieanlage 100 weist dabei einen elektrischen Generator 101 auf, der in der Gondel 104 angedeutet ist.

Mittels des Generators 101 kann elektrische Leistung erzeugt werden. Zum Einspeisen elektrischer Leistung ist eine Einspeiseeinheit 105 vorgesehen, die besonders als Wechselrichter ausgebildet sein kann. Damit kann ein dreiphasiger Einspeisestrom und/oder eine dreiphasige Einspeisespannung nach Amplitude, Frequenz und Phase erzeugt werden, zum Einspeisen an einem Netzanschlusspunkt PCC. Das kann direkt oder auch gemeinsam mit weiteren Windenergieanlagen in einem Windpark erfolgen. Zum Steuern der Windenergieanlage 100 und auch der Einspeiseeinheit 105 ist eine Anlagensteuerung 103 vorgesehen. Die Anlagensteuerung 103 kann auch Vorgabewerte von extern, insbesondere von einem zentralen Parkrechner erhalten.

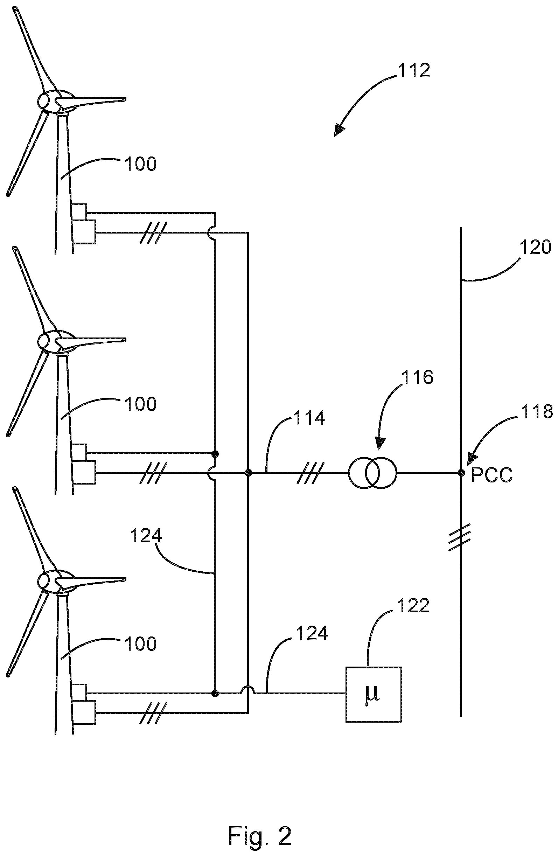

Figur 2 zeigt einen Windpark 112 mit beispielhaft drei Windenergieanlagen 100, die gleich oder verschieden sein können. Die drei Windenergieanlagen 100 stehen somit repräsentativ für im Grunde eine beliebige Anzahl von Windenergieanlagen eines Windparks 112. Die Windenergieanlagen 100 stellen ihre Leistung, nämlich insbesondere den erzeugten Strom über ein elektrisches Parknetz 114 bereit. Dabei werden die jeweils erzeugten Ströme bzw. Leistungen der einzelnen Windenergieanlagen 100 aufaddiert und meist ist ein Transformator 116 vorgesehen, der die Spannung im Park hochtransformiert, um dann an dem Einspeisepunkt 118, der auch allgemein als PCC bezeichnet wird, in das Versorgungsnetz 120 einzuspeisen.

Figur 2 ist nur eine vereinfachte Darstellung eines Windparks 112. Es kann beispielsweise das Parknetz 114 anders gestaltet sein, indem beispielsweise auch ein Transformator am Ausgang jeder Windenergieanlage 100 vorhanden ist, um nur ein anderes Ausführungsbeispiel zu nennen. Der Windpark 112 weist zudem einen zentralen Parkrechner 122 auf, der synonym auch als zentrale Parksteuerung bezeichnet werden kann. Dieser kann über Datenleitungen 124, oder kabellos, mit den Windenergieanlagen 100 verbunden sein, um darüber mit den Windenergieanlagen Daten auszutauschen und insbesondere Messwerte von den Windenergieanlagen 100 zu erhalten und Steuerwerte an die Windenergieanlagen 100 zu übertragen.

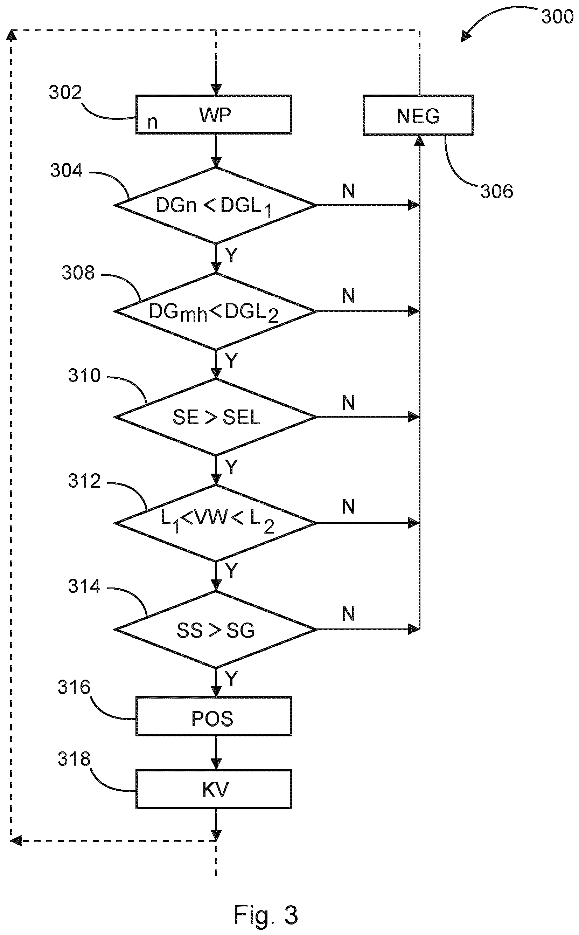

Figur 3 zeigt ein Ablaufdiagramm 300, das ein Schema zum Prüfen auf das Sonderwetterphänomen der Strahlungstage illustriert. Zu Beginn wird in dem Erfassungsblock 302 eine numerische Wetterprognose gebildet, oder dadurch erfasst, dass die numerische Wetterprognose von einem externen Anbieter wie einem Wetterdienst empfangen wird. Diese numerische Wetterprognose enthält somit Vorhersagewerte für zukünftiges Wetter, insbesondere für den nächsten Tag.

Diese Wetterdaten werden dann in dem Prüfblock 304 für niedrige Wolken einer ersten Prüfung unterzogen, nämlich ob ein Bedeckungsgrad für niedrige Wolken unterhalb eines vorbestimmten ersten Deckungsgrenzwertes liegt. Wenn das nicht der Fall ist, dann wird davon ausgegangen, dass keine Strahlungstage bzw. kein Strahlungstag vorliegt und der Prüfblock 304 verzweigt dann in den Negativblock 306.

Wurde aber erkannt, dass der Bedeckungsgrad für niedrige Wolken unterhalb eines vorbestimmten ersten Deckungsgrenzwertes liegt, so verzweigt das Ablaufdiagramm 300 in den Prüfblock 308 für mittelhohe Wolken. Dort wird geprüft, ob der Bedeckungsgrad für mittelhohe Wolken unterhalb eines vorbestimmten zweiten Deckungsgrenzwertes liegt. Ist das nicht der Fall, so wird wieder davon ausgegangen, dass keine Strahlungstage vorliegen und somit verzweigt dann der Prüfblock 308 für mittelhohe Wolken zum Negativblock 306.

Andernfalls wird die Prüfung fortgesetzt, nämlich im Prüfblock auf solare Einstrahlung 310. In dem Prüfblock wird geprüft, ob eine kurzwellige solare Einstrahlung mit Wellenlängen im Bereich von 400 bis 1000 nm oberhalb eines vorbestimmten Bestrahlungsgrenzwertes liegt, der im Bereich von 450 bis 900 W/m$^2$ liegt. Ist das nicht der Fall, ist diese kurzwellige solare Einstrahlung also geringer, wird wieder davon ausgegangen, dass keine Strahlungstage vorliegen, sodass zu dem Negativblock 306 verzweigt wird.

Liegt die kurzwellige solare Einstrahlung aber ausreichend hoch, wird die Prüfung im Windgeschwindigkeitsprüfblock 312 fortgesetzt. Im Windgeschwindigkeitsprüfblock 312 wird geprüft, ob eine Windgeschwindigkeit eines Windes eines Druckniveaus in einem vorbestimmten Windgeschwindigkeitsbereich liegt. Als Druckniveau können 925 hPa oder 950 hPa angenommen werden. Welcher Wert gewählt wird, also von welchem Druckniveau der Wind betrachtet wird, kann auch von den vorhandenen Daten der numerischen Wetterprognose abhängen, weil möglicherweise nur Werte der Windgeschwindigkeit für einen der beiden Druckniveaus von einem externen Wetterdienst geliefert wurden. Liegt die Windgeschwindigkeit nicht in einem vorbestimmten Windgeschwindigkeitsbereich, so wird auch von dem Windgeschwindigkeitsprüfblock 312 zu dem Negativblock 306 verzweigt.

Andernfalls wird die Prüfung in dem Sonnenstandprüfblock 314 fortgesetzt. In dem Sonnenstandprüfblock 314 wird geprüft, ob der Sonnenstand der untersuchten numerischen Wetterprognose oberhalb einer vorbestimmten Sonnenstandsgrenze liegt. Ist das nicht der Fall, ist der Sonnenstand also niedriger, so wird wieder davon ausgegangen, dass kein Strahlungstag vorliegt bzw. für den prognostizierten Vorhersagebereich vorliegt, sodass der Sonnenstandsprüfblock 314 dann zum Negativblock 306 verzweigt.

Ist der Sonnenstand aber ausreichend hoch, so wird davon ausgegangen, dass das Sonderwetterphänomen des Strahlungstags vorliegt. Entsprechend verzweigt das Prüfverfahren gemäß Figur 3 bzw. gemäß dem Ablaufdiagramm 300 zum Positivblock 316, demnach von dem Vorliegen eines Strahlungstags ausgegangen wird. Entsprechend steuert das Verfahren dann den Korrekturblock 318 an, demnach eine Korrektur der Normalprognose initiiert wird. Die Korrektur berücksichtigt dabei, dass als Sonderwetterphänomen ein Strahlungstag erkannt wurde.

Das Ablaufschema der Figur 3 kann täglich - oder beliebig häufig, z.B. jeweils bei Vorliegen aktualisierter Eingangsdaten, d.h. jeweils nach Lieferung neuer Wetterprognosedaten durch einen externen Wetterdienst - wiederholt werden, wobei der Erfassungsblock 302 insoweit den Startblock bilden kann und somit verzweigt das Ablaufschema zurück zu diesem Erfassungsblock 302. Das ist sowohl ausgehend von dem Korrekturblock 318 als auch von dem Negativblock 306 durch entsprechend gestrichelte Linien gekennzeichnet.

Figur 3 zeigt somit eine Ausführungsform zum Prüfen auf das Sonderwetterphänomen der Strahlungstage. Die Kriterien können auch anderweitig abgeprüft werden, indem beispielsweise die Kriterien, die in den Blöcken 304, 308, 310, 312 und 314 geprüft werden, also die Strahlungsprüfkriterien, in einer anderen Reihenfolge geprüft werden. Es kommt auch in Betracht, dass die Strahlungsprüfkriterien zugleich geprüft werden und von einem Strahlungstag ausgegangen wird, wenn alle Kriterien positiv waren. Es kommt auch in Betracht, dass wenigstens eines der Strahlungsprüfkriterien negativ ausfallen darf, und eine positive Prüfung der übrigen Strahlungsprüfkriterien dann dennoch zu dem Ergebnis führt, dass von einem Strahlungstag ausgegangen wird.

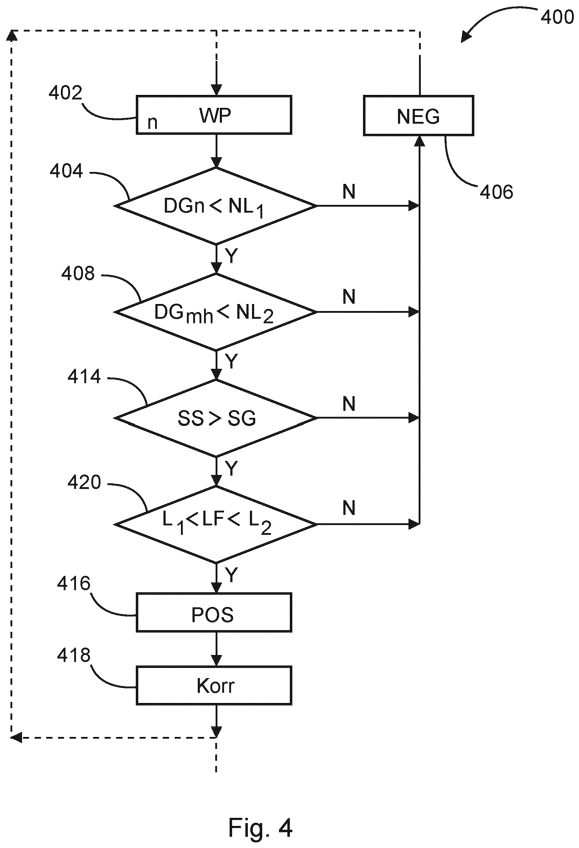

Figur 4 zeigt ein zu dem Ablaufdiagramm 300 ähnliches Ablaufdiagramm 400, nämlich zum Prüfen auf Low-Level-Jet-Nächte. Das Ablaufdiagramm 400 veranschaulicht somit im Wesentlichen ein Schema zum Prüfen auf Jet-Prüfkriterien.

Auch hier startet der Ablauf mit einem Erfassungsblock 402, in dem eine numerische Wetterprognose erfasst wird. Sie kann dazu gebildet werden oder beispielsweise von einem externen Wetterdienst empfangen werden. Diese numerische Wetterprognose wird dann auf die Jet-Prüfkriterien hin geprüft. Dazu erfolgt in dem Deckungsprüfblock für niedrige Wolken 404 eine Prüfung, ob der Bedeckungsgrad für niedrige Wolken unterhalb eines vorbestimmten ersten Nachtdeckungsgrenzwertes liegt. Ist das nicht der Fall, wird davon ausgegangen, dass keine Low-Level-Jet-Nacht bevorsteht. Der Deckungsprüfblock für niedrige Wolken 404 verzweigt dann zum Negativblock 406.

Andernfalls wird zum Deckungsprüfblock für mittelhohe Wolken 408 verzweigt. Hier wird geprüft, ob der Bedeckungsgrad für mittelhohe Wolken unterhalb eines vorbestimmten zweiten Nachtdeckungsgrenzwertes liegt. Ist das nicht der Fall, so wird wieder davon ausgegangen, dass keine Low-Level-Jet-Nacht bevorsteht, und es wird somit zum Negativblock 406 verzweigt. Andernfalls wird zum Sonnenstandprüfblock 414 verzweigt.

Im Sonnenstandprüfblock 414 wird geprüft, ob der Sonnenstand unterhalb einer vorbestimmten Jet-Sonnenstandsgrenze liegt. Hier ist der Sonnenstand eine Rechengröße, denn des Nachts ist die Sonne nicht zu sehen, dennoch weist sie einen Sonnenstand auf, der insoweit als negativ bezeichnet werden kann.

Ist der Sonnenstand nicht ausreichend niedrig, so wird wieder zum Negativblock 406 verzweigt, weil davon ausgegangen wird, dass der zu prognostizierende Zeitpunkt nicht in der Nacht liegt und damit auch kein Sonderwetterphänomen der Low-Level-Jet-Nächte prognostiziert werden muss. Andernfalls wird zum Luftfeuchteprüfblock 420 verzweigt. Hier wird geprüft, ob die Luftfeuchte in einem vorbestimmten Feuchtebereich liegt, und zwar für ein vorbestimmtes Druckniveau, das etwa 925 hPa oder 950 hPa betragen kann. Auch hier kann die Wahl des Druckniveaus von den zur Verfügung stehenden Daten abhängen.

Liegt die Luftfeuchte nicht in dem vorbestimmten Feuchtebereich, so wird wieder zum Negativblock 406 verzweigt und es wird davon ausgegangen, dass keine Low-Level-Jet-Nacht bevorsteht.

Andernfalls wären alle 4 Jet-Prüfkriterien positiv durchgeprüft, sodass das Ablaufdiagramm mit dem Positivblock 416 fortsetzt, demnach insgesamt davon ausgegangen wird, dass eine Low-Level-Jet-Nacht bevorsteht. Das führt dazu, dass im folgenden Block, nämlich dem Korrekturblock 418 eine Korrektur der Normalprognose initiiert bzw. durchgeführt wird.

Insoweit unterscheiden sich die Korrekturblöcke 318 der Figur 3 und 418 der Figur 4 darin, dass unterschiedliche Korrekturvorschriften zugrunde gelegt werden, nämlich im Falle der Figur 3 eine Korrekturvorschrift, die auf das Vorliegen des Sonderwetterphänomens der Strahlungstage abgestimmt ist, wohingegen im Fall der Figur 4, also gemäß dem Korrekturblock 418 eine Korrekturvorschrift angewendet wird, die das Sonderwetterphänomen einer Low-Level-Jet-Nacht zugrunde legt.

Das Ablaufdiagramm 400 der Figur 4 kann ebenfalls, unabhängig davon, ob von dem Sonderwetterphänomen der Low-Level-Jet-Nächte ausgegangen war oder nicht, besonders im Tagesrhythmus wiederholt werden. Das ist durch die zu dem Erfassungsblock 402 zurückführenden gestrichelten Pfeile angedeutet.

Auch hier gilt, dass die Prüfung auf die Jet-Prüfkriterien auch anders durchgeführt werden kann. Insbesondere kommt eine andere Reihenfolge in Betracht, oder eine gleichzeitige Prüfung. Vorzugsweise kommt auch in Betracht, dass zumindest eines der Jet-Prüfkriterien, die nämlich in den Blöcken 404, 408, 414 und 420 abgeprüft werden, negativ ausfallen kann. Vorzugsweise wird aber vorgeschlagen, dass alle Jet-Prüfkriterien erfüllt sein müssen, um von Low-Level-Jet-Nächten auszugehen.

Gleiches gilt auch sinngemäß für das Ablaufschema 300 der Figur 3, demnach vorzugsweise alle Strahlungsprüfkriterien erfüllt sein müssen, um von dem Sonderphänomen der Strahlungstage auszugehen.

Eine Korrekturvorschrift, die dann gemäß dem Korrekturblock 318 oder gemäß dem Korrekturblock 418 durchgeführt bzw. initiiert wird, kann durch vorherige Messungen bestimmt worden sein. Dafür können für jedes Sonderwetterphänomen einzelne Vergleichswerte aufgenommen werden. Liegt also beispielsweise ein Sonderwetterphänomen vor, also beispielsweise eine Low-Level-Jet-Nacht - gleiches gilt für das Sonderphänomen der Strahlungstage sinngemäß - so wird in diesem Fall, wenn dieses Sonderwetterphänomen also vorliegt, ein Datensatz erzeugt aus Leistungswerten gemäß der Normalprognose und tatsächlich gemessenen Leistungswerten.

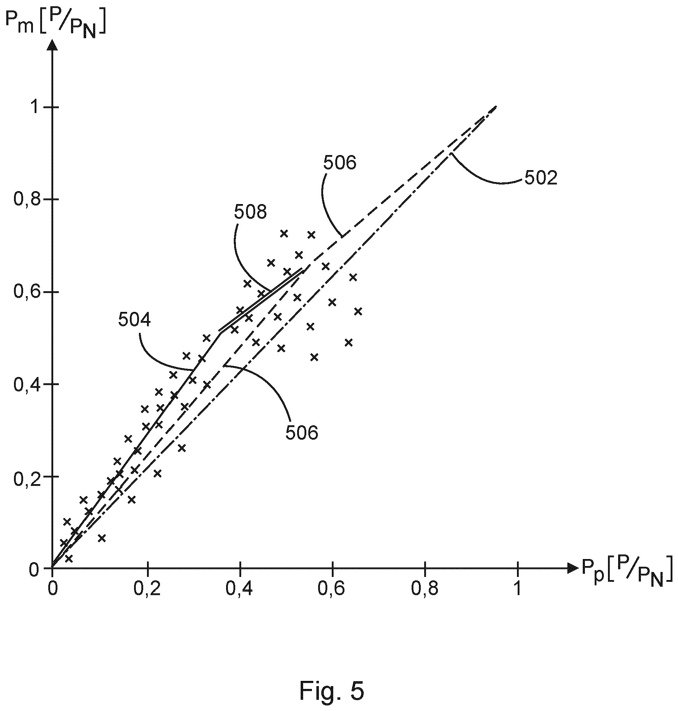

Das ist in dem Diagramm der Figur 5 veranschaulicht. In dem Diagramm steht die Abszisse für die Leistungswerte gemäß der Normalprognose, die dort als $P_P$ bezeichnet werden, und die Ordinate für die gemessenen Leistungswerte $P_m$. Beide Leistungswerte sind in dem Diagramm der Figur 5 normiert dargestellt, nämlich bezogen auf eine Nennleistung $P_N$ der betreffenden Windenergieanlage.

Es ergeben sich somit Wertepaare, die in dem Diagramm als Punkte eingezeichnet werden können. Das ist in Figur 5 veranschaulichend und schematisch vorgenommen worden, in dem nur einige solcher Messpaare als Messpunkte eingetragen sind. Diese ausgewählten und schematisch eingezeichneten Messpunkte entsprechen aber real durchgeführten Messungen, zumindest dem Grunde nach.

In dem Diagramm ist als strichpunktierte Linie die Winkelhalbierende eingezeichnet, die somit die Steigung 1 hat. Diese Linie zeigt somit die Werte an, bei denen die gemessene Leistung $P_m$ der prognostizierten Leistung $P_P$ entspricht.

Es wurde erkannt, dass besonders für eher geringe Leistungen im Bereich von 0 bis 0,4, also von 0 bis 40 Prozent der Nennleistung die Sonderwetterphänomene einen signifikanten Einfluss haben. Das Diagramm der Figur 5 zeigt Messwerte beim Auftreten eines der Sonderwetterphänomene. Dabei ist zu erkennen, dass die Messwerte, also die Wertepaare, im Durchschnitt eher oberhalb der strichpunktierten Mittellinie 502 liegen. Diese schematisch eingezeichneten Wertepaare in diesem unteren Bereich wurden durch eine lineare Regression angenähert und als lineare Regressionsgrade 504 eingezeichnet.

Oberhalb von 0,4, etwa bis 0,6, also von 40 bis 60 Prozent sind ebenfalls Messwerte eingezeichnet und demnach weichen die gemessenen Werte bei höheren Leistungen wieder weniger von dem Idealfall gemäß der Mittellinie 502 ab. Tritt kein Sonderwetterphänomen auf, wird zusätzlich vorgeschlagen, die Normalprognose mit einer Korrekturvorschrift zu korrigieren. Auch das kann das Ergebnis einer Regression sein. Diese Korrekturvorschrift ist als nichtlineare Regressionskurve 506 gestrichelt eingezeichnet. Die nichtlineare Regressionskurve 506 kann beispielsweise eine quadratische Regressionskurve sein, oder eine kubische Regressionskurve, oder eine gänzlich andere Regression.

Es wird nun vorgeschlagen, von der linearen Regressionskurve 504, in einem Bereich von 40 bis 60 Prozent der Nennleistung zur nichtlinearen Regressionskurve 506 überzugehen. Dazu ist eine Übergangskurve 508 als Doppellinie eingezeichnet.

Die nichtlineare Regressionskurve 506 betrifft also den Normalfall, bei dem kein Sonderwetterphänomen vorliegt. Liegt ein Sonderwetterphänomen vor, wird diese nichtlineare Regressionskurve 506 für geringere Leistungen nicht verwendet. Stattdessen wird als Korrekturvorschrift eine Korrekturvorschrift gemäß der linearen Regressionsgrade 504 vorgeschlagen, aber nur bis zu einer Leistung von 40 Prozent. Das bezieht sich hier, und auch sonst immer, auf die prognostizierte Leistung, denn nur die steht bei der Prognose zur Verfügung.

Für weiter steigende Leistung wird dann vorgeschlagen, wenn ein Sonderwetterphänomen vorliegt, über die Übergangskurve 508 mit steigender Leistung zur nichtlinearen Regressionskurve 506, also zur Korrekturvorschrift in Normalfall überzugehen.

Liegt kein Sonderwetterphänomen vor, wird also nur die Regression im Normalfall verwendet, es wird also eine Korrektur im Normalfall für jeden Leistungsbereich gemäß der nichtlinearen Regressionskurve 506 vorgenommen.

Besonders kann die nichtlineare Regressionskurve 506 einen normalen Korrekturzusammenhang bilden, der zur Korrektur der Normalprognose verwendet wird, wenn keines der Sonderwetterphänomene erkannt wurde. Die lineare Regressionskurve 504 kann einen Sonderkorrekturzusammenhang bilden, der zur Korrektur der Normalprognose unter Berücksichtigung wenigstens eines der Sonderwetterphänomene verwendet wird. Die Übergangskurve 508 kann einen oberen Korrekturzusammenhang bilden, der ein Übergangskorrekturzusammenhang ist, der mit zunehmenden prognostizierten Leistungswerten den unteren Korrekturzusammenhang 504 in den gesamten Korrekturzusammenhang 506 überführt.

Es wurde somit eine Lösung vorgeschlagen, um eine bessere Kenntnis der künftig produzierten Windleistung zu erhalten, insbesondere jeweils für die kommenden z.B. 7 Tage. Eine solche Kenntnis kann je nach benötigtem Aggregierungslevel (Einzelanlage, Windpark, Netzknoten, Teilportfolio, Portfolio, Regelzone, nationales Portfolio, Verbundnetz, Europäisches Verbundsystem, Inselnetz, etc.) entsprechend für den Regelbetrieb eingesetzt werden.

Es wurde folgendes erkannt:
Bei Auftreten der beiden meteorologischen Situationen

    1. Strahlungstage tagsüber mit Auftreten eines ausgeprägten Tagesgangs und

    2. Nächte mit Auftreten von Low Level Jets und morgendlichem Dip kurz nach Sonnenaufgang

enthalten die für die Erstellung von Windleistungsprognosen genutzten Eingangsdaten, z.B. numerische Wetterprognosen der nationalen Wetterdienste weltweit, regelmäßig systematische Fehler. Diese Fehler pflanzen sich in die erstellten Windleistungsprognosen fort und führen zu systematischen Risiken für die Endnutzer/-Kunden dieser Prognosen. Das kann z.B. den Stromhandel und den Betrieb der Stromnetze betreffen.

Folgende Aufgabe wurde erkannt: Zu lösen ist also grundsätzlich die Aufgabe der Korrektur der o.g. systematischen Fehler an einer geeigneten Stelle in der Prozesskette.

Eine teure Lösungsmöglichkeit ist die manuelle Live-Korrektur ganz am Ende der Prozesskette durch den jeweiligen Endnutzer der Windenergieanlage selbst. Diese Möglichkeit ist allerdings personal- und damit kostenintensiv (z.B. Meteorologe im Schichtdienst) und rechnet sich daher regelmäßig nur bei hinreichendem Business Case (z.B. bei hinreichend großem zu bewirtschaftenden Portfolio).

Die hieraus abgeleitete und entsprechend vorgeschlagene technische Aufgabe ist die Schaffung einer möglichst vollautomatisierten meteorologischen Korrektur einiger signifikanter systematischen Fehler an einer möglichst frühen Stelle in der Prozesskette, so dass im Idealfall durch eine einmalige und automatische Korrektur verschiedene Endnutzer profitieren können.

Als Lösung wird eine möglichst vollautomatisierte Korrektur bestimmter systematischer Fehler in Windleistungsprognosen besonders mit Hilfe der folgenden vorgeschlagenen meteorologischen Korrekturen für zwei bestimmte meteorologische Situationen, die auch synonym als Sonderwetterphänomene bezeichnet werden können, oder zumindest eine davon:

    1. Strahlungstage tagsüber

    2. Nächte mit Auftreten von Low Level Jets und/oder morgendlichem Dip kurz nach Sonnenaufgang.

Die Korrektur erfolgt, indem typische Fehler anhand historischer Messdaten (z.B. SCADA-Daten) korrigiert werden z.B. mit statistischen Verfahren, Maschine Learning Verfahren oder Optimierungsverfahren.

Ein großes Gebiet, in dem Leistung durch Windenergieanlagen erzeugt, angeboten und verteilt wird, wird in mehrere, regionale Cluster unterteilt. Das dient der Reduzierung des Prognosefehlers, denn regionale Summen der Windleistung können deutlich genauer prognostiziert werden als die Leistungsproduktion von einzelnen Anlagen oder Parks. Die räumliche Ausdehnung dieser Cluster beträgt ca. 100 bis 300 km, bezogen auf einen mittleren Durchmesser der Cluster.

Für die Entscheidung, ob die Korrekturen angewandt werden, müssen die spezifischen Wetterlagen erkannt werden, die auch synonym als Sonderwetterphänomen bezeichnet werden können. Die Erkennung beruht auf verschiedenen Variablen, für die erkannt wurde, dass sie für die jeweilige Wetterlage charakteristisch sind und die Anhand historischer Daten ermittelt und verifiziert wurden.

Vorschläge zur Berücksichtigung von Strahlungstagen tagsüber mit Auftreten eines Tagesgangs:
An Tagen mit hoher solarer Einstrahlung wurde beobachtet, dass bis zu 20 % der vorhergesagten Gesamtleistung mehr Leistung tatsächlich produziert wird als für Regelbetrieb durch unkorrigierte Nutzung der NWP-Vorhersagen prognostiziert wird.

Daher wurde vorgeschlagen, eine Korrekturfunktion in Form einer standardmäßigen linearen Regression zu implementieren.

Fällt die Lieferung einer numerischen Wetterprognose aus unvorhersehbaren Gründen aus, so können die meteorologischen Variablen zur Korrektur der Leistungsprognose auch aus anderen Wettervorhersagemodellen oder einer zeitlich früher gelieferten numerischen Wetterprognose genommen werden.

Bei den genannten meteorologischen Phänomenen dominieren in der Regel geringe Auslastungen der Windenergieanlagen in dem betreffenden Gebiet. Daher sind in dem Diagramm der Figur 5, das auch als Streudiagramm bezeichnet werden kann, die Messpunkte hauptsächlich links unten angeordnet. Es wird daher vorgeschlagen, die Anwendung der linearen Regression auf den entsprechenden Wertebereich zu beschränken, nämlich auf den Bereich von 0 bis 0,4, also von 0 bis 40%, bezogen auf die Nennleistung, und dafür die Korrekturfunktion zu ermitteln. Für alle anderen Fälle als die beiden meteorologischen Sonderphänomene wird die nichtlineare Regressionskurve 506 verwendet, die auch als übliche Korrektur oder Korrekturkurve bezeichnet werden kann. Um einen stetigen und damit physikalisch sinnvollen Übergang von der Sonderkorrektur gemäß der linearen Regressionsgrade 504 auf die übliche Korrektur gemäß der nichtlinearen Regressionskurve 506 zu erhalten, wird eine lineare Verbindungslinie in der Korrekturfunktion eingeführt, nämlich die Übergangskurve 508. Die hier vorgeschlagenen meteorologischen Korrekturen liefern zu Zeiten des Auftretens einer der beiden Situationen eine jeweils als bestmöglich angenommene Windleistungsprognose. Es werden somit möglichst geringe Prognosefehler erreicht.

**Patentansprüche**

1. Verfahren zum Erstellen einer Leistungsprognose (504) für wenigstens eine Windenergieanlage (100) über eine zu erwartende Abgabeleistung der wenigstens einen Windenergieanlage (100), wobei die wenigstens eine Windenergieanlage (100) an einem Aufstellungsort aufgestellt ist, und das Verfahren umfasst die Schritte

   - Bestimmen einer Normalprognose (502),
   - Prüfen auf wenigstens ein, zu einem systematischen Fehler der Normalprognose (502) führenden Sonderwetterphänomen,
   - Ermitteln wenigstens einer Korrekturvorschrift zum Korrigieren der Normalprognose (502), wenn beim Prüfen ein Sonderwetterphänomen erkannt wurde, und
   - Korrigieren der Normalprognose (502) gemäß der wenigstens einen ermittelten Korrekturvorschrift, um eine angepasste Leistungsprognose (504) zu erhalten, **dadurch gekennzeichnet, dass**
   - Strahlungstage ein Sonderwetterphänomen bilden, wobei

     - bei solchen Strahlungstagen tagsüber während eines oder mehrerer Tage eine hohe Solareinstrahlung oberhalb eines vorbestimmbaren Einstrahlungsgrenzwertes vorliegt, und

   - in Abhängigkeit der Strahlungstage, insbesondere in Abhängigkeit der hohen Solareinstrahlung, als Korrekturvorschrift ein zeitabhängiger Korrekturverlauf bestimmt wird und/oder dass
   - Low-Level-Jet-Nächte ein Sonderwetterphänomen bilden, wobei
   - sich bei solchen Low-Level-Jet-Nächten durch das Ausbilden einer nächtlichen Bodeninversion eine stabile Grenzschicht bildet, und sich oberhalb dieser stabilen Grenzschicht eine hohe Jet-Windgeschwindigkeit mit einem Wert oberhalb eines vorbestimmbaren Jet-Grenzwertes ausbildet, und insbesondere
   - in Abhängigkeit von der Jet-Windgeschwindigkeit ein zeitabhängiger Korrekturverlauf als Korrekturvorschrift bestimmt wird.

2. Verfahren nach Anspruch 1,
   **dadurch gekennzeichnet, dass**

   - das Sonderwetterphänomen überregional über den Aufstellungsort hinaus auftritt, insbesondere eine Großwetterlage betrifft, und/oder in einem Bereich von wenigstens $1000km^2$ insbesondere wenigstens $10000km^2$ um den Aufstellungsort herum auftritt.

3. Verfahren nach einem der Ansprüche 1 oder 2,
   **dadurch gekennzeichnet, dass**

   - zum Prüfen auf das wenigstens eine Sonderwetterphänomen eine Wetterprädiktion durchgeführt wird, die in einem Vorhersagezeitraum von wenigstens einem 15-Minuten-Intervall, insbesondere wenigstens einer Stunde und besonders bevorzugt wenigstens einem Tag auf ein zu erwartendes Auftreten des Sonderwetterphänomens geprüft wird.

4. Verfahren nach Anspruch 1,
   **dadurch gekennzeichnet, dass**

   - Strahlungstage dadurch als Sonderwetterphänomen erkannt werden, dass zwei, drei, vier oder alle Strahlungsprüfkriterien erfüllt sind aus der Liste aufweisend:

     - ein Bedeckungsgrad für niedrige Wolken liegt unterhalb eines vorbestimmten ersten Deckungsgrenzwertes,
     - ein Bedeckungsgrad für mittelhohe Wolken liegt unterhalb eines vorbestimmten zweiten Deckungsgrenzwertes,
     - eine kurzwellige solare Einstrahlung mit Wellenlängen im Bereich von 400 bis 1000 nm, weist eine Bestrahlungsstärke oberhalb eines vorbestimmten Bestrahlungsgrenzwertes auf, wobei der vorbestimmte Bestrahlungsgrenzwert insbesondere im Bereich von 450 bis 900 W/m^2 liegt,
     - eine Windgeschwindigkeit eines Windes wenigstens eines Druckniveaus liegt in einem vorbestimmten Windgeschwindigkeitsbereich, wobei vorzugsweise

       - der Wind eines Druckniveaus von etwa 925 hPa und/oder
       - der Wind eines Druckniveaus von etwa 950 hPa betrachtet wird, und

     - der Sonnenstand liegt oberhalb einer vorbestimmten Sonnenstandsgrenze,

- wobei insbesondere eine numerische Wetterprognose gebildet und auf die Strahlungsprüfkriterien untersucht wird.

5. Verfahren nach Anspruch 1, **dadurch gekennzeichnet, dass**

- Low-Level-Jet-Nächte dadurch als Sonderwetterphänomen erkannt werden, dass zwei, drei oder alle Jet-Prüfkriterien erfüllt sind aus der Liste aufweisend:

- der Bedeckungsgrad für niedrige Wolken liegt unterhalb eines vorbestimmten ersten Nacht-Deckungsgrenzwertes,
- der Bedeckungsgrad für mittelhohe Wolken liegt unterhalb eines vorbestimmten zweiten Nacht-Deckungsgrenzwertes,
- der Sonnenstand liegt unterhalb einer vorbestimmten Jet-Sonnenstandsgrenze
- eine Luftfeuchte wenigstens eines vorbestimmten Druckniveaus liegt in einem vorbestimmten Feuchtebereich, wobei vorzugsweise

- ein vorbestimmtes Druckniveau von etwa 925 hPa und/oder
- ein vorbestimmtes Druckniveau von etwa 950 hPa betrachtet wird, und

- wobei insbesondere eine numerische Wetterprognose gebildet und auf die Jet-Prüfkriterien untersucht wird.

6. Verfahren nach einem der vorstehenden Ansprüche, **dadurch gekennzeichnet, dass**

- im Falle einer erkannten Low-Level-Jet-Nacht im sich anschließenden Morgen geprüft wird, ob ein morgendlicher Dip auftritt, wobei
- ein morgendlicher Dip ein Wetterphänomen beschreibt, bei dem eine durch das Ausbilden einer nächtlichen Bodeninversion gebildete stabile Grenzschicht, bei der sich oberhalb dieser stabilen Grenzschicht eine hohe Jet-Windgeschwindigkeit ausbildet, zusammenbricht, und
- abhängig davon, ob ein morgendlicher Dip erkannt wurde, eine Korrektur als Korrekturvorschrift oder als Teil der Korrekturvorschrift bestimmt wird.

7. Verfahren nach einem der vorstehenden Ansprüche, **dadurch gekennzeichnet, dass**

- wenigstens eine der ermittelten Korrekturvorschriften

- aus früheren, beim Auftreten eines der Sonderwetterphänomene erfassten Werten abgeleitet wird, und/oder
- beim erneuten Auftreten eines betreffenden Sonderwetterphänomens ggf. adaptiert wird.

8. Verfahren nach einem der vorstehenden Ansprüche, **dadurch gekennzeichnet, dass**

- beim Auftreten eines der Sonderwetterphänomene ein Zusammenhang zwischen

- erfassten Leistungswerten und
- prognostizierten Leistungswerten gemäß einer zugehörigen Normalprognose

als Korrekturzusammenhang erstellt wird, insbesondere

- über eine Regression über mehrere Leistungswerte, wobei vorzugsweise
- für prognostizierte Leistungswerte unterhalb einer ersten Leistungsgrenze, ein unterer Korrekturzusammenhang erstellt wird, insbesondere über eine lineare Regression, und optional
- für prognostizierte Leistungswerte oberhalb der ersten Leistungsgrenze, ein oberer Korrekturzusammenhang erstellt wird, insbesondere über eine lineare Regression, und/oder zusätzlich
- für prognostizierte Leistungswerte unterhalb und oberhalb der ersten Leistungsgrenze, ein gesamter Korrekturzusammenhang erstellt wird, und

- zum Erstellen der angepassten Leistungsprognose in Abhängigkeit von der Normalprognose der untere, obere und/oder oder gesamte Korrekturzusammenhang die Korrekturvorschrift bildet bzw. bilden, oder die Korrekturvorschrift aus dem unteren, oberen und/oder oder gesamten Korrekturzusammenhang abgeleitet wird, insbesondere

ist die erste Leistungsgrenze eine auf eine Gesamtleistung der wenigstens einen Windenergieanlage (100) normierten Leistungsgrenze, die vorzugsweise im Bereich von 0,3 bis 0,5 liegt.

9. Verfahren nach Anspruch 8, **dadurch gekennzeichnet, dass**

- der gesamte Korrekturzusammenhang ein normaler Korrekturzusammenhang ist, der zur Korrektur der Normalprognose verwendet wird, wenn keines der Sonderwetterphänomene erkannt wurde, wobei

- der untere Korrekturzusammenhang ein Sonderkorrekturzusammenhang ist, der zur Korrektur der Normalprognose unter Berücksichtigung wenigstens eines der Sonderwetterphänomene verwendet wird, und
- der obere Korrekturzusammenhang ein Übergangskorrekturzusammenhang ist, der mit zunehmenden prognostizierten Leistungswerten den unteren Korrekturzusammenhang in den gesamten Korrekturzusammenhang überführt.

10. Verfahren nach einem der vorstehenden Ansprüche, **dadurch gekennzeichnet, dass**

- die Normalprognose abhängig von einer numerischen Wetterprognose erstellt wird.

11. Verfahren zum Erstellen einer Gesamtleistungsprognose für mehrere Windenergieanlage (100), insbesondere mehrere Windparks, wobei

- jeweils mehrere in einem vorbestimmten Bereich aufgestellte Windenergieanlagen (100) und/oder Windparks in Windclustern zusammengefasst sind,
- für jeden Windcluster eine Leistungsprognose gemäß einem der vorstehenden Ansprüche erstellt wird und
- als Gesamtleistungsprognose die Summe der Leistungsprognosen aller Windcluster gebildet wird, wobei
- für jeden Windcluster wenigstens

- das Prüfen auf das wenigstens eine Sonderwetterphänomen und
- das Ermitteln wenigstens einer Korrekturvorschrift

unabhängig von den übrigen Windclustern erfolgt, wobei insbesondere vorgesehen ist, dass

- mehrere Windcluster, mehr als die Hälfte der Windcluster und insbesondere alle Windcluster jeweils eine räumlich Ausdehnung mit einem mittleren Durchmesser von 50 km bis 500km aufweisen, insbesondere von 100km bis 300km.

12. Windenergiesystem mit wenigstens einer Windenergieanlage (100), vorbereitet zum Erstellen einer Leistungsprognose über eine zu erwartende Abgabeleistung der wenigstens einen Windenergieanlage (100), wobei

- die wenigstens eine Windenergieanlage (100) an einem Aufstellungsort aufgestellt ist, und das Windenergiesystem eine Steuereinrichtung aufweist, die dazu vorbereitet ist, ein Verfahren auszuführen, umfassend die Schritte,
- Bestimmen einer Normalprognose,
- Prüfen auf wenigstens ein, zu einem systematischen Fehler der Normalprognose führenden Sonderwetterphänomen,
- Ermitteln wenigstens einer Korrekturvorschrift zum Korrigieren der Normalprognose, wenn beim Prüfen ein Sonderwetterphänomen erkannt wurde, und
- Korrigieren der Normalprognose gemäß der wenigstens einen ermittelten Korrekturvorschrift, um eine angepasste Leistungsprognose zu erhalten, wobei vorgesehen ist, dass
- das Windenergiesystem, insbesondere die Steuereinrichtung, dazu vorbereitet ist, ein Verfahren nach einem der Ansprüche 1 bis 11 auszuführen

13. Windenergiesystem nach Anspruch 12, umfassend mehrere Windenergieanlagen (100), insbesondere mehrere Windparks, und das Windenergiesystem, insbesondere die Steuereinrichtung, ist vorbereitet zum Erstellen einer Gesamtleistungsprognose für die mehreren Windenergieanlagen (100), bzw. die mehreren Windparks, wobei

- jeweils mehrere in einem vorbestimmten Bereich aufgestellte Windenergieanlagen (100) und/oder Windparks in Windclustern zusammengefasst sind,
- für jeden Windcluster eine Leistungsprognose gemäß einem der vorstehenden Ansprüche erstellt wird und
- als Gesamtleistungsprognose die Summe der Leistungsprognosen aller Windcluster gebildet wird, wobei
- für jeden Windcluster wenigstens

- das Prüfen auf das wenigstens eine Sonderwetterphänomen und
- das Ermitteln wenigstens einer Korrekturvorschrift

unabhängig von den übrigen Windclustern erfolgt.

**Claims**

1. Method for creating a power forecast (504) for at least one wind power installation (100) about an expected output power of the at least one wind power installation (100), wherein the at least one wind power installation (100) is installed at an installation site, and the method comprises the steps of

- determining a normal forecast (502),
- checking for at least one special weather phenomenon leading to a systematic error in the normal forecast (502),

- ascertaining at least one correction rule for correcting the normal forecast (502) if a special weather phenomenon was identified during the checking, and

- correcting the normal forecast (502) in accordance with the at least one ascertained correction rule in order to obtain an adjusted power forecast (504), **characterized in that**

- days with strong radiation constitute a special weather phenomenon, wherein

- on such days with strong radiation in the daytime over the course of one or more days, a high solar radiation above a predeterminable radiation limit value is present, and

- a time-dependent correction profile is determined as the correction rule on the basis of the days with strong radiation, in particular on the basis of the high solar radiation

and/or **in that**

- low-level jet nights constitute a special weather phenomenon, wherein

- on such low-level jet nights, a stable boundary layer is formed by the formation of a nocturnal ground inversion, and a high jet wind speed having a value above a predeterminable jet limit value is formed above this stable boundary layer, and in particular

- a time-dependent correction profile is determined as the correction rule on the basis of the jet wind speed.

2. Method according to Claim 1, **characterized in that**

- the special weather phenomenon occurs nationally beyond the installation site, in particular relates to a general weather situation, and/or occurs in an area of at least 1000 km$^2$, in particular at least 10,000 km$^2$, around the installation site.

3. Method according to either of Claims 1 and 2, **characterized in that**

- to check for the at least one special weather phenomenon, a weather forecast is carried out, which is checked for an expected occurrence of the special weather phenomenon in a forecast period of at least one 15-minute interval, in particular at least one hour and particularly preferably at least one day.

4. Method according to Claim 1, **characterized in that**

- days with strong radiation are identified as special weather phenomena **in that** two, three, four or all radiation check criteria are met from the list comprising:

- a degree of low-cloud cover is below a predetermined first cover limit value,

- a degree of medium-high-cloud cover is below a predetermined second cover limit value,

- a short-wave solar radiation having wavelengths in the range from 400 to 1000 nm has an irradiance above a predetermined irradiance limit value, wherein the predetermined irradiance limit value is in particular in the range from 450 to 900 W/m^2,

- a wind speed of a wind of at least one pressure level is in a predetermined wind speed range, wherein preferably

- the wind of a pressure level of approximately 925 hPa and/or

- the wind of a pressure level of approximately 950 hPa is considered, and

- the sun position is above a predetermined sun position limit,

- wherein in particular a numerical weather forecast is formed and examined for the radiation check criteria.

5. Method according to Claim 1, **characterized in that**

- low-level jet nights are identified as special weather phenomena **in that** two, three or all jet check criteria are met from the list comprising:

- the degree of low-cloud cover is below a predetermined first night cover limit value,

- the degree of medium-high-cloud cover is below a predetermined second night cover limit value,

- the sun position is below a predetermined jet sun position limit,

- a humidity of at least one predetermined pressure level is in a predetermined humidity range, wherein preferably

- a predetermined pressure level of about 925 hPa and/or

- a predetermined pressure level of about 950 hPa is considered, and

- wherein in particular a numerical weather forecast is formed and examined for the jet check criteria.

6. Method according to one of the preceding claims, **characterized in that**

- in the event of an identified low-level jet night, it is checked the following morning whether a morning dip occurs, wherein
- a morning dip describes a weather phenomenon in which a stable boundary layer formed by the formation of a nocturnal ground inversion, in the case of which a high jet wind speed forms above this stable boundary layer, collapses, and
- a correction is determined as the correction rule or as part of the correction rule on the basis of whether a morning dip was identified.

7. Method according to one of the preceding claims, **characterized in that**

- at least one of the ascertained correction rules
- is derived from earlier values recorded when one of the special weather phenomena occurs, and/or
- is possibly adapted if a relevant special weather phenomenon occurs again.

8. Method according to one of the preceding claims, **characterized in that**

- if one of the special weather phenomena occurs, a relationship between
- recorded power values and
- forecasted power values in accordance with an associated normal forecast
is created as a correction relationship, in particular
- by a regression over a plurality of power values, wherein preferably
- for forecasted power values below a first power limit, a lower correction relationship is created, in particular by a linear regression, and optionally
- for forecasted power values above the first power limit, an upper correction relationship is created, in particular by a linear regression, and/or additionally
- for forecasted power values below and above the first power limit, an overall correction relationship is created, and
- to create the adjusted power forecast on the basis of the normal forecast, the lower, upper and/or or overall correction relationship form/forms the correction rule, or the correction rule is derived from the lower, upper and/or or overall correction relationship, in particular

the first power limit is a power limit normalized to an overall power of the at least one wind power installation (100), preferably in the range from 0.3 to 0.5.

9. Method according to Claim 8, **characterized in that**

- the overall correction relationship is a normal correction relationship used to correct the normal forecast if none of the special weather phenomena were identified, wherein
- the lower correction relationship is a special correction relationship used to correct the normal forecast while taking into account at least one of the special weather phenomena, and
- the upper correction relationship is a transition correction relationship which transfers the lower correction relationship to the overall correction relationship as forecasted power values increase.

10. Method according to one of the preceding claims, **characterized in that**

- the normal forecast is created on the basis of a numerical weather forecast.

11. Method for creating an overall power forecast for a plurality of wind power installations (100), in particular a plurality of wind farms, wherein

- a plurality of wind power installations (100) and/or wind farms installed in a predetermined area are respectively grouped together in wind clusters,
- a power forecast according to one of the preceding claims is created for each wind cluster, and
- the sum of the power forecasts of all the wind clusters is formed as the overall power forecast, wherein
- for each wind cluster, at least
- checking for the at least one special weather phenomenon and
- ascertaining at least one correction rule take place independently of the other wind clusters, wherein in particular provision is made for
- a plurality of wind clusters, more than half of the wind clusters and in particular all of the wind clusters to each have a spatial expansion having an average diameter of 50 km to 500 km, in particular of 100 km to 300 km.

12. Wind power system having at least one wind power installation (100), set up to create a power forecast about an expected output power of the at least one wind power installation (100), wherein

- the at least one wind power installation (100) is installed at an installation site, and the wind power system has a control device which is set up to perform a method comprising the steps of
- determining a normal forecast,
- checking for at least one special weather phenomenon leading to a systematic error in the normal forecast,
- ascertaining at least one correction rule for correcting the normal forecast if a special weather phenomenon was identified during the checking, and

- correcting the normal forecast in accordance with the at least one ascertained correction rule in order to obtain an adjusted power forecast, wherein provision is made for

- the wind power system, in particular the control device, to be set up to perform a method according to one of Claims 1 to 11.

13. Wind power system according to Claim 12, comprising a plurality of wind power installations (100), in particular a plurality of wind farms, and the wind power system, in particular the control device, is set up to create an overall power forecast for the plurality of wind power installations (100), or the plurality of wind farms, wherein

- a plurality of wind power installations (100) and/or wind farms installed in a predetermined area are respectively grouped together in wind clusters,
- a power forecast according to one of the preceding claims is created for each wind cluster, and
- the sum of the power forecasts of all the wind clusters is formed as the overall power forecast, wherein
- for each wind cluster, at least
- checking for the at least one special weather phenomenon and
- ascertaining at least one correction rule take place independently of the other wind clusters.

**Revendications**

1. Procédé pour élaborer une prévision de puissance (504) pour au moins une éolienne (100) sur une puissance de sortie attendue de l'au moins une éolienne (100), dans lequel l'au moins une éolienne (100) est installée sur un site d'installation, et le procédé comprend les étapes de

- détermination d'une prévision normale (502),
- vérification de la présence d'au moins un phénomène météorologique particulier conduisant à une erreur systématique de la prévision normale (502),
- établissement d'au moins une prescription de correction pour corriger la prévision normale (502) si un phénomène météorologique particulier a été identifié lors de la vérification, et
- correction de la prévision normale (502) selon l'au moins une prescription de correction établie pour obtenir une prévision de puissance (504) ajustée, **caractérisé en ce que**

- les jours de rayonnement constituent un phénomène météorologique particulier, dans lequel
- lors de tels jours de rayonnement, un rayonnement solaire élevé supérieur à une valeur limite de rayonnement prédéterminable est présent pendant un ou plusieurs jours, et
- en fonction des jours de rayonnement, en particulier en fonction du rayonnement solaire élevé, une courbe de correction dépendant du temps est déterminée comme prescription de correction
et/ou que
- les nuits de jet à basse altitude constituent un phénomène météorologique particulier, dans lequel
- une couche limite stable se forme lors de telles nuits de jet à basse altitude par la réalisation d'une inversion au sol nocturne, et une vitesse de vent de jet élevée se réalise au-dessus de cette couche limite stable avec une valeur supérieure à une valeur limite de jet prédéterminable, et en particulier
- en fonction de la vitesse de vent de jet, une courbe de correction dépendante du temps est déterminée comme prescription de correction.

2. Procédé selon la revendication 1,
**caractérisé en ce que**

- le phénomène météorologique particulier survient au-delà du lieu d'installation sur le plan suprarégional, concerne en particulier une situation météorologique générale, et/ou survient dans une zone d'au moins 1 000 km$^2$ en particulier d'au moins 10 000 km$^2$ autour du lieu d'installation.

3. Procédé selon l'une quelconque des revendications 1 ou 2,
**caractérisé en ce que**

- pour vérifier la présence de l'au moins un phénomène météorologique particulier, une prédiction météorologique est effectuée, qui est vérifiée sur une période de prévision d'au moins un intervalle de 15 minutes, en particulier d'au moins une heure et de manière particulièrement préférée d'au moins un jour pour rechercher la présence d'une survenance attendue du phénomène météorologique particulier.

4. Procédé selon la revendication 1,
**caractérisé en ce que**

- les jours de rayonnement sont identifiés comme des phénomènes météorologiques particuliers par le fait que deux, trois, quatre ou tous les critères de vérification du rayonnement sont remplis dans la liste présentant :

- un degré de couverture pour les nuages bas est inférieur à une première limite de couverture prédéterminée,

- un degré de couverture pour les nuages moyens est inférieur à une deuxième limite de couverture prédéterminée,

- un rayonnement solaire à ondes courtes avec des longueurs d'onde dans la plage de 400 à 1000 nm, présente une intensité d'irradiation supérieure à une valeur limite d'irradiation prédéterminée, dans lequel la valeur limite d'irradiation prédéterminée se situe en particulier dans la plage de 450 à 900 W/m^2,

- une vitesse de vent d'un vent d'au moins un niveau de pression se situe dans une plage de vitesse de vent prédéterminée, dans lequel de préférence

- le vent d'un niveau de pression d'environ 925 hPa et/ou

- le vent d'un niveau de pression d'environ 950 hPa est considéré, et

- la position du soleil est supérieure à une limite de position du soleil prédéterminée,

- dans lequel en particulier une prévision météorologique numérique est formée et recherchée dans les critères de vérification de rayonnement.

5. Procédé selon la revendication 1, **caractérisé en ce que**

- les nuits de jet à basse altitude sont identifiées comme des phénomènes météorologiques particuliers par le fait que deux, trois ou tous les critères de vérification de jet sont remplis dans la liste présentant :

- le degré de couverture pour les nuages bas est inférieur à une première valeur limite de couverture nocturne prédéterminée,

- le degré de couverture pour les nuages moyens est inférieur à une deuxième valeur limite de couverture nocturne prédéterminée,

- la position du soleil est inférieure à une limite jet-position du soleil prédéterminée

- une humidité de l'air d'au moins un niveau de pression prédéterminé se situe dans une plage d'humidité prédéterminée, dans lequel de préférence

- un niveau de pression prédéterminé d'environ 925 hPa et/ou

- un niveau de pression prédéterminé d'environ 950 hPa est considéré, et

- dans lequel en particulier une prévision météorologique numérique est formée et recherchée dans les critères d'essai de jet.

6. Procédé selon l'une quelconque des revendications précédentes, **caractérisé en ce que**

- en cas d'identification d'une nuit de jet à basse altitude, le matin suivant, on vérifie si une baisse des températures juste après le lever du soleil survient, dans lequel

- une baisse des températures juste après le lever du soleil décrit un phénomène météorologique dans lequel une couche limite stable formée par la réalisation d'une inversion au sol nocturne, pour laquelle une vitesse de vent de jet élevée se réalise au-dessus de cette couche limite stable, se décompose, et

- selon qu'une baisse des températures juste après le lever du soleil a été identifiée, une correction est déterminée comme prescription de correction ou comme partie de la prescription de correction.

7. Procédé selon l'une quelconque des revendications précédentes, **caractérisé en ce que**

- au moins une des prescriptions de correction déterminées

- - est dérivée de valeurs antérieures acquises lors de la survenance d'un des phénomènes météorologiques particuliers, et/ou

- - est adaptée le cas échéant en cas de nouvelle survenance d'un phénomène météorologique particulier concerné.

8. Procédé selon l'une quelconque des revendications précédentes, **caractérisé en ce que**

- lors de la survenance d'un des phénomènes météorologiques particuliers, une corrélation entre

- les valeurs de puissance acquises et

- les valeurs de puissance prévues selon une prévision normale correspondante

est établie comme corrélation de correction, en particulier

- par une régression sur plusieurs valeurs de puissance, dans lequel de préférence

- pour les valeurs de puissance prévues inférieures à une première limite de puissance, une corrélation de correction inférieure est élaborée, en particulier via une régression linéaire, et facultativement

- pour les valeurs de puissance prévues supérieures à la première limite de puissance, une corrélation de correction supérieure est élaborée, en particulier via une régression linéaire, et/ou en plus

- une corrélation de correction complète est élaborée pour les valeurs de puissance prévues inférieures et supérieures à la première limite de puissance, et

- pour élaborer la prévision de puissance ajustée en fonction de la prévision normale la corrélation de correction inférieure, supérieure et/ou totale forme ou forment la prescription de correction, ou la prescription de correction est dérivée de la corrélation de correction inférieure, supérieure et/ou totale, en particulier

la première limite de puissance est une limite de puissance normalisée à une puissance totale de l'au moins une éolienne (100) qui se situe de préférence dans la plage de 0,3 à 0,5.

9. Procédé selon la revendication 8, **caractérisé en ce que**

- la corrélation de correction totale est une corrélation de correction normale qui est utilisée pour corriger la prévision normale si aucun des phénomènes météorologiques particuliers n'a été identifié, dans lequel

- la corrélation de correction inférieure est une corrélation de correction particulière qui est utilisée pour corriger la prévision normale en tenant compte d'au moins un des phénomènes météorologiques particuliers, et
- la corrélation de correction supérieure est une corrélation de correction transitoire qui, avec l'augmentation des valeurs de puissance prévues, transpose la corrélation de correction inférieure dans l'ensemble de la corrélation de correction.

10. Procédé selon l'une quelconque des revendications précédentes, **caractérisé en ce que**

- la prévision normale est élaborée en fonction d'une prévision météorologique numérique.

11. Procédé pour élaborer une prévision de puissance totale pour plusieurs éoliennes (100), en particulier plusieurs parcs éoliens, dans lequel

- plusieurs éoliennes (100) et/ou parcs éoliens installés chacun dans une zone prédéterminée sont regroupés en clusters éoliens,
- une prévision de puissance selon l'une quelconque des revendications précédentes est élaborée pour chaque cluster éolien et
- la somme des prévisions de puissance de tous les clusters éoliens est formée en tant que prévision de puissance totale, dans lequel
- pour chaque cluster éolien au moins
- la vérification de la présence de l'au moins un phénomène météorologique particulier et
- l'établissement d'au moins une prescription de correction

s'effectue indépendamment des autres clusters éoliens, dans lequel en particulier il est prévu que

- plusieurs clusters éoliens, plus de la moitié des clusters éoliens et en particulier tous les clusters éoliens présentent chacun une étendue spatiale avec un diamètre moyen de 50 km à 500 km, en particulier de 100 km à 300 km.

12. Système d'énergie éolienne avec au moins une éolienne (100), destiné à élaborer une prévision de puissance sur une puissance de sortie attendue de l'au moins une éolienne (100), dans lequel

- l'au moins une éolienne (100) est installée sur un site d'installation et le système d'énergie éolienne présente un dispositif de commande qui est préparé pour mettre en œuvre un procédé comprenant les étapes de
- détermination d'une prévision normale,
- vérification de la présence d'au moins un phénomène météorologique particulier conduisant à une erreur systématique de la prévision normale,
- établissement d'au moins une prescription de correction pour corriger la prévision normale si un phénomène météorologique particulier a été identifié lors de la vérification, et
- correction de la prévision normale selon l'au moins une prescription de correction établie pour obtenir une prévision de puissance ajustée, dans lequel il est prévu que
- le système d'énergie éolienne, en particulier le dispositif de commande, soit préparé pour mettre en œuvre un procédé selon l'une quelconque des revendications 1 à 11

13. Système éolien selon la revendication 12, comprenant plusieurs éoliennes (100), en particulier plusieurs parcs éoliens, et le système éolien, en particulier le dispositif de commande, est préparé pour élaborer une prévision de puissance totale pour les plusieurs éoliennes (100), ou les plusieurs parcs éoliens, dans lequel

- plusieurs éoliennes (100) et/ou parcs éoliens installés chacun dans une zone prédéterminée sont regroupés en clusters éoliens,
- une prévision de puissance selon l'une quelconque des revendications précédentes est élaborée pour chaque cluster éolien et

- la somme des prévisions de puissance de tous les clusters éoliens est formée en tant que prévision de puissance totale, dans lequel
- pour chaque cluster éolien au moins
- la vérification de la présence de l'au moins un phénomène météorologique particulier et
- l'établissement d'au moins une prescription de correction

s'effectue indépendamment des autres clusters éoliens.

Fig. 1

Fig. 2

300

302 — n WP          NEG

304 — DGn < DGL$_1$ ——N——→

306

308 — DG$_{mh}$ < DGL$_2$ ——N——→

Y

310 — SE > SEL ——N——→

Y

312 — L$_1$ < VW < L$_2$ ——N——→

Y

314 — SS > SG ——N——→

Y

316 — POS

318 — KV

Fig. 3

EP 3 832 131 B1

Fig. 4

26

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2020201209 A1
- WO 2020079000 A1
- US 20140244188 A1
- US 20180031735 A1
- DE 102018125465 A1
- DE 102019108300 A1
- EP 3432091 A1